(19) Europäisches Patentamt
European Patent Office
Office européen des brevets

(11) Veröffentlichungsnummer : **0 121 871**
**B1**

(12) # EUROPÄISCHE PATENTSCHRIFT

(45) Veröffentlichungstag der Patentschrift : **20.01.88**

(21) Anmeldenummer : **84103484.6**

(22) Anmeldetag : **29.03.84**

(51) Int. Cl.⁴ : **C 07 F 9/58**, C 07 F 9/65, C 07 F 9/60, A 01 N 57/24

(54) **Propionsäureester und deren Verwendung als Unkrautbekämpfungsmittel.**

(30) Priorität : **06.04.83 CH 1843/83**

(43) Veröffentlichungstag der Anmeldung : **17.10.84 Patentblatt 84/42**

(45) Bekanntmachung des Hinweises auf die Patenterteilung : **20.01.88 Patentblatt 88/03**

(84) Benannte Vertragsstaaten : **AT BE CH DE FR GB IT LI NL SE**

(56) Entgegenhaltungen :
**EP-A- 0 054 715**
**EP-A- 0 065 287**
**EP-A- 0 073 040**
**Die Akte enthält technische Angaben, die nach dem Eingang der Anmeldung eingereicht wurden und die nicht in dieser Patentschrift enthalten sind.**

(73) Patentinhaber : **F. HOFFMANN-LA ROCHE & CO. Aktiengesellschaft**
**CH-4002 Basel (CH)**

(72) Erfinder : **Fráter, Georg, Dr.**
**Schachenweg 22**
**CH-8610 Uster (CH)**
Erfinder : **Wenger, Jean, Dr.**
**Brunnenwiesenstrasse 1**
**CH-8610 Uster (CH)**
Erfinder : **Suchy, Milos, Dr.**
**Grossplatzstrasse 3**
**CH-8122 Pfaffhausen (CH)**
Erfinder : **Winternitz, Paul, Dr.**
**Am Pfisterhölzli 50**
**CH-8606 Greifensee (CH)**

(74) Vertreter : **Lederer, Franz, Dr. et al**
**Van der Werth, Lederer & Riederer Patentanwälte**
**Lucile-Grahn-Strasse 22**
**D-8000 München 80 (DE)**

**EP 0 121 871 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Propionsäureester der allgemeinen Formel

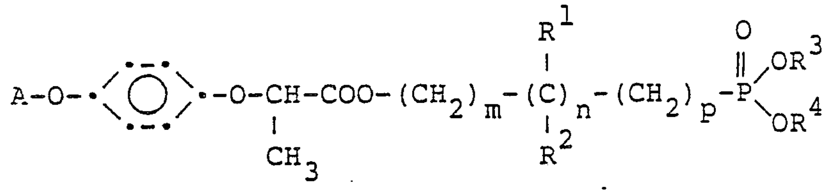

(I)

worin A eine der folgenden Gruppen (a) und (b)

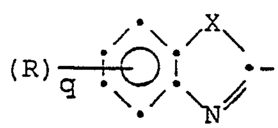

(a)

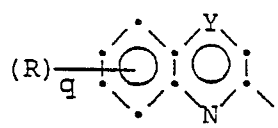

(b)

R Wasserstoff, Halogen, $C_{1-4}$-Alkyl, Trifluormethyl, $C_{1-4}$-Alkoxy oder $C_{1-4}$-Alkylthio,
X Sauerstoff, Schwefel oder —$NR^5$—,
Y die Methingruppe, d. h. die Gruppe —CH=, oder ein Stickstoffatom,
$R^1$ Wasserstoff oder $C_{1-4}$-Alkyl und $R^2$ Wasserstoff, $C_{1-4}$-Alkyl, $C_{1-4}$-Halogenalkyl oder gegebenenfalls mono- oder mehrfach substituiertes Phenyl, wobei die gegebenenfalls vorhandenen Substituenten Halogenatome, $C_{1-4}$-Alkylgruppen, $C_{1-4}$-Alkoxygruppen und Nitrogruppen sind, oder $R^1$ und $R^2$, zusammen mit dem Kohlenstoffatom, an das sie geknüpft sind, einen gegebenenfalls substituierten $C_{5-8}$-Cycloalkanring, wobei die gegebenenfalls vorhandenen Substituenten eine bis drei $C_{1-4}$-Alkylgruppen sind,
$R^3$ und $R^4$, unabhängig voneinander, $C_{1-6}$-Alkyl oder Phenyl,
$R^5$ Wasserstoff oder $C_{1-4}$-Alkyl,.
m, n und p, unabhängig voneinander, die Zahl 0 oder 1, wobei deren Summe mindestens 1 beträgt, und q die Zahl 1 oder 2 bedeuten.

Die Verbindungen der Formel I besitzen herbizide Eigenschaften und eignen sich als Wirkstoffe von Unkrautbekämpfungsmitteln. Somit umfasst die Erfindung auch Unkrautbekämpfungsmittel, welche Verbindungen der Formel I als Wirkstoffe enthalten, Verfahren zur Herstellung dieser Verbindungen sowie die Verwendung solcher Verbindungen bzw. Mittel zur Bekämpfung von Unkräutern.

Die europäische Patentpublikation Nr. 73 040 beschreibt herbizid wirksame substituierte [2-(Phenoxy- und Pyridyloxyphenoxy)-propionyloxy] alkylphosphonsäuredialkylester. Die erfindungsgemässen Verbindungen unterscheiden sich von den bekannten Verbindungen im wesentlichen durch die Anwesenheit einer 2-Benzoxazolyloxy-, 2-Benzthiazolyloxy-, 2-Benzimidazolyloxy-, 2-Chinolyloxy- oder 2-Chinoxalyloxygruppe als Endgruppe anstelle einer Phenoxy- oder Pyridyloxygruppe.

Die europäische Patentpublikation Nr. 54 715 beschreibt herbizid wirksame substituierte (2-Phenoxyphenoxy-propionyloxy) alkylphosphonsäure-dialkylester, -phenylalkylester und diphenylester, von denen sich die erfindungsgemässen Verbindungen im wesentlichen durch die Anwesenheit einer der oben genannten Heterocyclyloxygruppen als Endgruppe anstelle der substituierten Phenoxygruppe unterscheiden.

In der obigen Formel I umfassen « Halogen » Fluor, Chlor, Brom und Jod und « $C_{1-4}$-Halogenalkyl » mit einem oder mehreren Halogenatomen substituiertes $C_{1-4}$-Alkyl. Unter « $C_{1-4}$-Alkyl » bzw. « $C_{1-6}$-Alkyl » sind sowohl geradkettige als auch verzweigte Alkylgruppen zu verstehen, wie Methyl, Aethyl, n-Propyl, Isopropyl, n-Butyl, Isobutyl, tert. Butyl, n-Pentyl, Isoamyl, neo-Pentyl und n-Hexyl. Dies gilt auch für den Alkylteil der Alkoxy-, Alkylthio- und Halogenalkylgruppen. Im Falle von Mehrfachsubstitution können die Substituenten gleich oder verschieden sein. Falls q 2 bedeutet, können die Reste R ebenfalls gleich oder verschieden sein.

Das Vorhandensein mindestens eines asymmetrischen Kohlenstoffatoms in den Verbindungen der Formel I hat zur Folge, dass die Verbindungen in isomeren Formen auftreten können, welche in enantiomerer oder diastereomerer Beziehung zueinander stehen. Das gleiche gilt für die Verbindungen der Formel I, in der zusätzlich $R^3$ und $R^4$ unterschiedliche Bedeutung besitzen. Die aufgetrennten isomeren Formen weisen optische Aktivität auf. Demnach soll die Formel I die Racemate sowie all die möglichen isomeren Formen umfassen.

In den Verbindungen der Formel I ist ein allfällig vorhandenes Halogenatom vorzugsweise Chlor. Von den $C_{5-8}$-Cycloalkangruppen ($CR^1R^2$) ist Cyclohexan bevorzugt.

Unabhängig voneinander bedeuten R vorzugsweise Wasserstoff oder Halogen, insbesondere Chlor ; $R^1$ und $R^2$ jeweils vorzugsweise Wasserstoff, Methyl oder Aethyl ; $R^3$ und $R^4$ jeweils vorzugsweise $C_{1-4}$-Alkyl ; und q vorzugsweise 1.

Darüber hinaus sind die D-Formen der Verbindungen der Formel I bevorzugt.

Besonders bevorzugte Verbindungen der Formel I sind :

[D-2-[p-(6-Chlor-2-chinoxalyloxy) phenoxy]-propionyloxy] methylphosphonsäure-diäthylester und

[D-2-[p-(6-Chlor-2-chinolyloxy) phenoxy]-propionyloxy]-methylphosphonsäure-diäthylester.

Das erfindungsgemässe Verfahren zur Herstellung der Verbindungen der Formel I ist dadurch gekennzeichnet, dass man

a) eine Säure der allgemeinen Formel

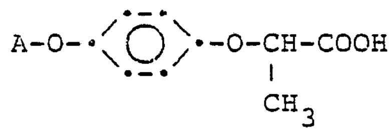

(II)

worin A die oben angegebene Bedeutung besitzt, oder ein reaktionsfähiges Derivat davon, mit einem Alkohol der allgemeinen Formel

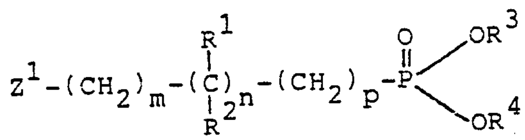

(III)

worin

$R^1$, $R^2$, $R^3$, $R^4$, m, n und p die oben angegebenen Bedeutungen besitzen und

$Z^1$ Hydroxy oder eine Abgangsgruppe bedeutet,

umsetzt,

b) ein Phenol der allgemeinen Formel

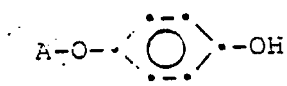

(IV)

worin A die oben angegebene Bedeutung besitzt, oder vorzugsweise ein Alkalimetallsalz davon, mit einer Verbindung der allgemeinen Formel

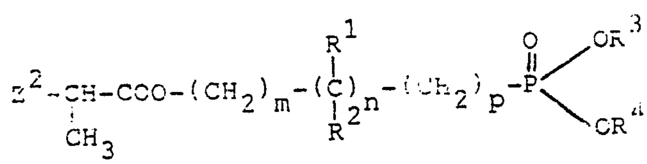

(V)

worin

$R^1$, $R^2$, $R^3$, $R^4$, m, n und p die oben angegebenen Bedeutungen besitzen und

$Z^2$ eine Abgangsgruppe, z. B. Chlor, Brom, Jod, Mesyloxy oder Tosyloxy, bedeutet,

umsetzt, oder

c) ein Halogenid der allgemeinen Formel

A—Hal (VI)

worin

A die oben angegebene Bedeutung besitzt und

Hal Halogen, insbesondere Chlor, bedeutet,

mit einem Phenol der allgemeinen Formel

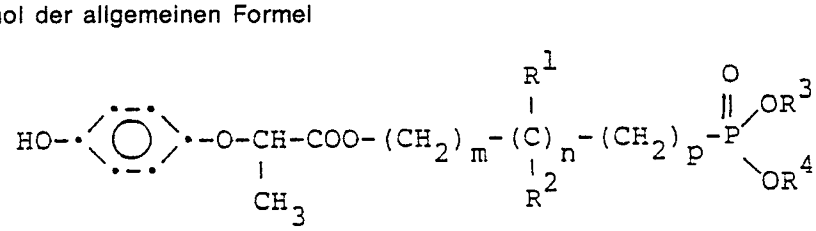

(VII)

worin $R^1$, $R^2$, $R^3$, $R^4$, m, n und p die oben angegebenen Bedeutungen besitzen, oder vorzugsweise einem Alkalimetallsalz davon, umsetzt.

Bei der Verfahrensvariante a) handelt es sich um eine Veresterung, die nach an sich bekannten Methoden durchgeführt werden kann, z. B. gemäss den nachfolgenden Varianten $a_1$), $a_2$) und $a_3$) :

| Edukt | Reagens |
|---|---|
| $a_1$) Freie Säure der Formel II oder ein Salz davon | Verbindung der Formel III, worin $Z^1$ eine Abgangsgruppe, wie Chlor, Brom, Jod, Mesyloxy oder Tosyloxy, bedeutet |
| $a_2$) Halogenid, Imidazolid oder Anhydrid der Säure der Formel II | Verbindung der Formel III, worin $Z^1$ Hydroxy bedeutet |
| $a_3$) Freie Säure der Formel II | Verbindung der Formel III, worin $Z^1$ Hydroxy bedeutet. |

Bei der Verfahrensvariante $a_1$) bedeutet der Ausdruck « Salz » beispielsweise ein Alkalimetallsalz, z. B. das Natrium-, Kalium- oder Lithiumsalz, ein Erdalkalimetallsalz, z. B. das Magnesium-, Calcium- oder Bariumsalz, ein Salz einer organischen Base, z. B. ein Mono-, Di- oder Trialkylammoniumsalz oder ein Pyridiniumsalz, oder das Ammoniumsalz. Der Ausdruck « Abgangsgruppe » für $Z^1$ steht vorzugsweise für Chlor, Brom oder Jod.

Die Veresterung der Säure der Formel II, vorzugsweise in Form eines Salzes, mit der Verbindung der Formel III wird vorzugsweise in einem inerten Verdünnungsmittel und bei Temperaturen von — 10 °C bis 100 °C durchgeführt. Ein besonders bevorzugter Temperaturbereich ist derjenige zwischen 20 °C und 70 °C. Es kommen als Verdünnungsmittel vorzugsweise inerte organische Lösungsmittel in Frage. Hierzu gehören vorzugsweise aliphatische Ketone, z. B. Aceton und Aethylmethylketon, und dipolare aprotische Lösungsmittel, z. B. Dimethylformamid, Dimethylsulfoxid, N-Methylpyrrolidon, Sulfolan und Hexamethylphosphorsäuretriamid.

Bei Verwendung der freien Säure der Formel II wird die Umsetzung zweckmässigerweise in Gegenwart einer Base bzw. eines Säureacceptors durchgeführt. Man kann dazu alle üblicherweise verwendbaren anorganischen und organischen säurebindenden Mittel benützen, zu denen vorzugsweise Alkalimetall- und Erdalkalimetallcarbonate und -bicarbonate, und tertiäre Amine, z. B. Triäthylamin, Dimethylanilin und Pyridin, gehören.

Die Umsetzung nach Verfahrensvariante $a_2$) wird zweckmässigerweise in einem inerten Verdünnungsmittel wie einem Aether, z. B. Diäthyläther, einem Kohlenwasserstoff, z. B. n-Hexan, Benzol oder Toluol, oder einem chlorierten Kohlenwasserstoff, z. B. Dichlormethan, Chloroform oder Tetrachlorkohlenstoff, und bei Raumtemperatur oder erhöhter Temperatur, z. B. bis zur Rückflusstemperatur des Reaktionsgemisches, durchgeführt.

Bei Verwendung eines Säurehalogenides der Säure der Formel II wird die Umsetzung zweckmässigerweise in Gegenwart eines säurebindenden Mittels bei etwa — 10 °C bis 30 °C durchgeführt. Als säurebindende Mittel sind geeignet anorganische Basen, z. B. Alkalimetall- und Erdalkalimetallcarbonate und -bicarbonate, insbesondere aber organische Basen, z. B. tertiäre Amine, insbesondere Triäthylamin oder Pyridin. Das Säurehalogenid ist vorzugsweise das Säurechlorid. Bei Verwendung des Anhydrids der Säure der Formel II erfolgt die Umsetzung zweckmässigerweise in Gegenwart eines säurebindenden Mittels, insbesondere einer organischen Base, wie eines tertiären Amins, z. B. Triäthylamin, Dimethylanilin oder Pyridin, bei Temperaturen zwischen 0 °C und 40 °C, insbesondere bei Raumtemperatur, oder ohne säurebindendes Mittel bei erhöhter Temperatur.

Bei der Verfahrensvariante $a_3$) erfolgt die Umsetzung zweckmässigerweise in einem inerten organischen Verdünnungsmittel, wie einem aliphatischen oder cyclischen Aether, z. B. Diäthyläther, Diisopropyläther, 1,2-Dimethoxyäthan, Tetrahydrofuran oder Dioxan, einem chlorierten Kohlenwasserstoff, wie Dichlormethan, Chloroform, Tetrachlorkohlenstoff oder Trichloräthan, oder einem aromatischen Kohlenwasserstoff, wie Benzol, Toluol oder einem Xylol, und bei Temperaturen zwischen 0 °C und der Rückflusstemperatur des Reaktionsgemisches. Die Umsetzung erfolgt zweckmässigerweise in Gegenwart eines sauren Katalysators bzw. eines kondensierenden Mittels, wie Schwefelsäure, Salzsäure, p-Toluolsulfonsäure, Dicyclohexylcarbodiimid oder Carbonyldiimidazol. Vorzugsweise wird Carbonyldiimidazol als kondensierendes Mittel benützt, wobei bevorzugt in Gegenwart eines Aethers als Verdünnungsmittel umgesetzt wird. So wird die Säure der Formel II z. B. in einem inerten organischen Verdünnungsmittel, insbesondere einem alicyclischen oder cyclischen Aether, gelöst oder suspendiert und die Lösung bzw. Suspension zu einer Lösung oder Suspension von Carbonyldiimidazol in der gleichen Verdünnungsmittel gegeben. Nach Beendigung der resultierenden Entwicklung von Kohlenstoffdioxid wird das Gemisch mit einer Lösung des Alkohol der Formel III, die zuvor mit einer katalytischen Menge Natrium oder Natriumhydrid bis zur Beendigung von Wasserstoffentwicklung versetzt wurde, versetzt. Die Umsetzung erfolgt vorzugsweise in einem Temperaturbereich zwischen Raumtemperatur und ca. 50 °C und ist normalerweise innert ca. 2 Stunden beendet.

Die Umsetzung nach Verfahrensvariante b) erfolgt zweckmässigerweise in einem inerten organischen

Lösungsmittel, insbesondere einem dipolaren aprotischen Lösungsmittel, wie Dimethylformamid, Dimethylsulfoxid, N-Methylpyrrolidon, Sulfolan oder Hexamethylphosphorsäuretriamid. Die Reaktionstemperatur ist nicht kritisch, und man arbeitet vorzugsweise bei Temperaturen zwischen 20 °C und 150 °C, insbesondere zwischen 40 °C und 80 °C. Vorzugsweise wird das Phenol der Formel IV in Form eines Alkalimetallsalzes, insbesondere des Natriumsalzes, umgesetzt. Dies kann erfolgen, indem man das Phenol mit der Verbindung der Formel V in Gegenwart einer Base, wie Natrium- oder Kaliumhydroxid oder Natrium- oder Kaliumcarbonat, umsetzt. In einer weiteren Ausführungsform dieser Verfahrensvariante wird das Phenol mit der Verbindung der Formel V in Gegenwart eines säurebindenden Mittels, wie Calciumhydroxid, Triäthylamin oder Pyridin, nach an sich bekannter Weise umgesetzt.

Die Verfahrensvariante c) kann zweckmässigerweise durchgeführt werden, indem man das Phenol der Formel VII in ein Alkalimetallsalz, beispielsweise unter Verwendung von Natriumhydrid oder Kaliumhydroxid mit azeotroper Wasserentfernung, überführt und anschliessend das Salz mit dem Halogenid der Formel VI umsetzt. Die letztgenannte Reaktionsstufe wird zweckmässigerweise in einem dipolaren aprotischen Lösungsmittel, z. B. Dimethylformamid, Dimethylsulfoxid, N-Methylpyrrolidon, Sulfolan oder Hexamethylphosphorsäuretriamid, oder in Pyridin, bei Temperaturen zwischen 50 °C und 200 °C, vorzugsweise zwischen 80 °C und 150 °C, vorgenommen. In einer weiteren Ausführungsform dieser Verfahrensvariante wird das Halogenid mit dem Phenol an sich in Gegenwart eines organischen säurebindenden Mittels, wie Triäthylamin oder Pyridin, nach an sich bekannter Weise umgesetzt.

In jedem Fall kann das erhaltene Produkt nach an sich bekannten Methoden isoliert und gereinigt werden.

Sofern keine gezielte Synthese zur Isolierung reiner Isomerer durchgeführt wird, fällt das Produkt normalerweise als Gemisch zweier oder mehrerer Isomerer an. Die Isomeren können nach an sich bekannten Methoden aufgetrennt werden. Gewünschtenfalls können sie auch durch Synthese aus entsprechenden optisch aktiven Ausgangsmaterialien hergestellt werden.

Die Ausgangsmaterialien der Formeln II, III, IV and VI sowie reaktionsfähige Derivate der Säuren der Formel II und Alkalimetallsalze der Phenole der Formel IV sind entweder bekannt oder können in an sich bekannter Weise hergestellt werden.

Die als Ausgangsmaterialien in der Verfahrensvariante b) verwendeten Verbindungen der Formel V sind neu ; sie können z. B. gemäss dem nachfolgenden Reaktionsschema hergestellt werden :

Reaktionsschema

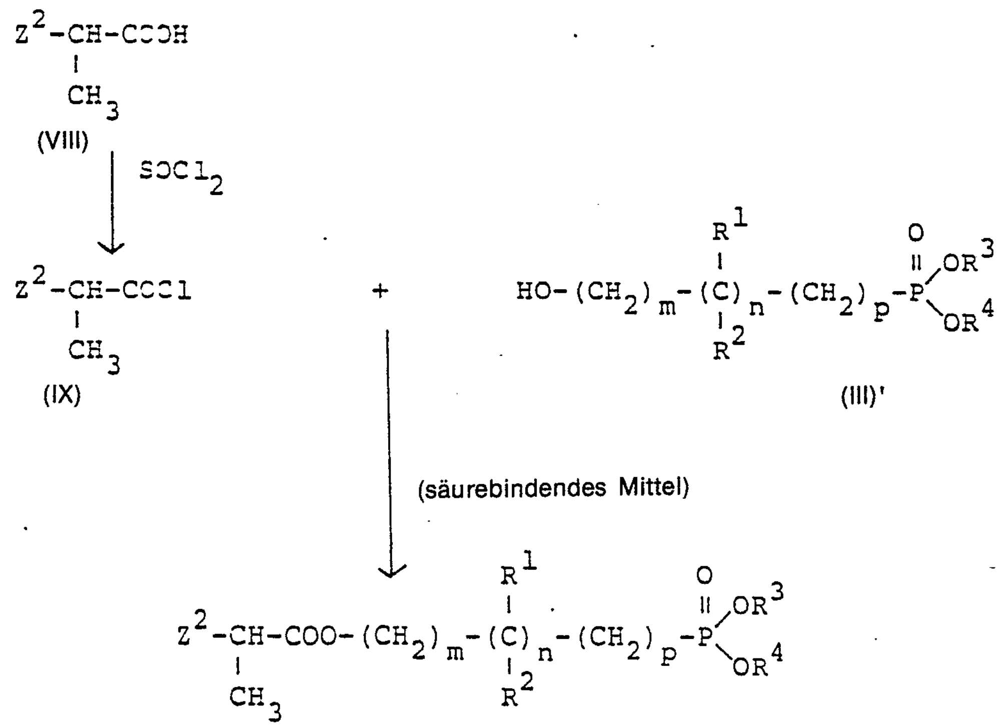

(VIII) (IX) (III)' (V)

Im obigen Reaktionsschema besitzen $R^1$, $R^2$, $R^3$, $R^4$, m, n, p und $Z^2$ die oben angegebenen Bedeutungen. Die Reaktionsbedingungen sind dem Fachmann geläufig.

Die als Ausgangsmaterialien in der Verfahrensvariante c) verwendeten Phenole der Formel VII und ihre Alkalimetallsalze sind ebenfalls neu ; sie können z. B. gemäss einem der nachfolgenden Reaktionsschemata hergestellt werden :

Reaktionsschemata

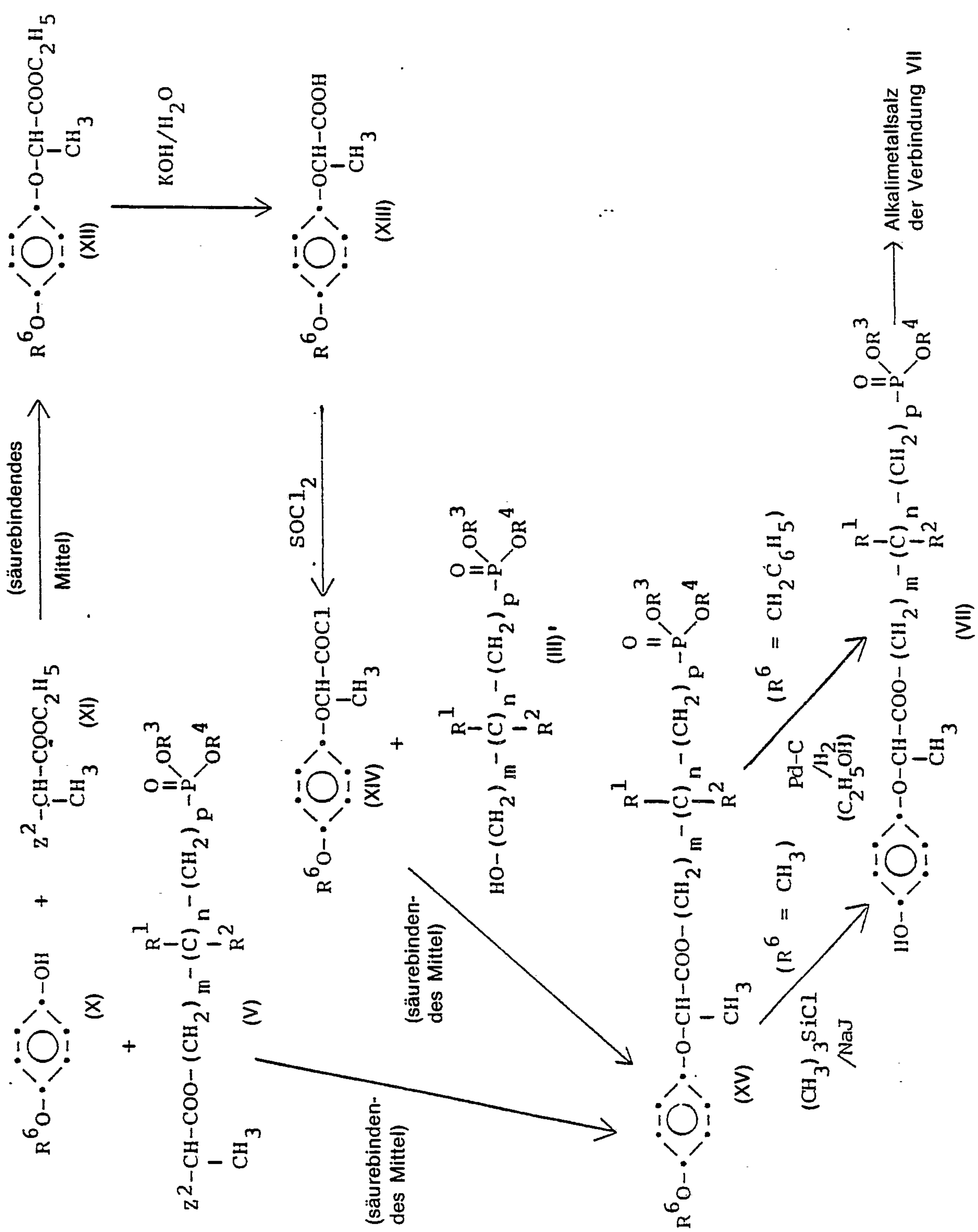

In den obigen Reaktionsschemata besitzen $R^1$, $R^2$, $R^3$, $R^4$, m, n, p und $Z^2$ die oben angegebenen Bedeutungen und bedeutet $R^6$ Methyl oder Benzyl. Die Reaktionsbedingungen sind dem Fachmann geläufig, wobei für die Endstufe XV ($R^6 = CH_3$) $\rightarrow$ VII (Aetherspaltung) insbesondere auf J. Org. Chem. 44, 1247-1251 (1979) verwiesen wird.

Die Verbindungen der Formel I besitzen herbizide Eigenschaften und eignen sich besonders zur Bekämpfung von Unkräutern, insbesondere von Ackerfuchsschwanz (Alopecurus myosuroides) und Hirsearten, wie beispielsweise Hühnerhirse (Echinochloa crus-galli), grosse Borstenhirse (Setaria faberii) und haarartige Hirse (Panicum capillare) in Getreide, insbesondere Gersten-, Hafer- und Weizenkulturen, sowie in Reis-, Baumwolle-, Soja-, Zuckerrüben- und Gemüsekulturen. Besonders bevorzugt eignen sich die erfindungsgemässen Verbindungen zur Bekämpfung von Unkräutern in Baumwolle-, Soja- und Zuckerrübenkulturen.

Im allgemeinen genügt eine Konzentration von 10-100 g Wirkstoff der Formel I/ha, vorzugsweise 20-50 g Wirkstoff der Formel I/ha, um den gewünschten herbiziden Effekt zu erzielen.

Die Verbindungen der Formel I sind sowohl Vorauflauf-Herbizide als auch Nachauflauf-Herbizide.

Das erfindungsgemässe Unkrautbekämpfungsmittel ist dadurch gekennzeichnet, dass es eine wirksame Menge mindestens einer Verbindung der Formel I, wie oben definiert, sowie Formulierungshilfsstoffe enthält. Das Mittel enthält zweckmässigerweise zumindest einen der folgenden Formulierungshilfsstoffe : feste Trägerstoffe ; Lösungs- bzw. Dispersionsmittel ; Tenside (Netz- und Emulgiermittel) ; Dispergatoren (ohne Tensidwirkung) ; und Stabilisatoren. Unter Verwendung solcher und anderer Hilfsstoffe können die Verbindungen der Formel I, also die herbiziden Wirkstoffe, in die üblichen Formulierungen übergeführt werden, wie Stäube, Pulver, Granulate, Lösungen, Emulsionen, Suspensionen, emulgierbare Konzentrate, Pasten und dergleichen.

Die Verbindungen der Formel I sind im allgemeinen wasserunlöslich und können nach den für wasserunlösliche Verbindungen üblichen Methoden unter Verwendung der diesbezüglichen Formulierungshilfsstoffe konfektioniert werden. Die Herstellung der Mittel kann in an sich bekannter Weise durchgeführt werden, z. B. durch Vermischen des jeweiligen Wirkstoffes mit festen Trägerstoffen, durch Auflösen oder Suspendieren in geeigneten Lösungs- bzw. Dispersionsmitteln, eventuell unter Verwendung von Tensiden als Netz- oder Emulgiermitteln und/oder von Dispergatoren, durch Verdünnen bereits vorbereiteter emulgierbarer Konzentrate mit Lösungs- bzw. Dispersionsmitteln usw.

Als feste Trägerstoffe kommen im wesentlichen in Frage : natürliche Mineralstoffe, wie Kreide, Dolomit, Kalkstein, Tonerden und Kieselsäure und deren Salze (beispielsweise Kieselgur, Kaolin, Bentonit, Talkum, Attapulgit und Montmorillonit) ; synthetische Mineralstoffe, wie hochdisperse Kieselsäure, Aluminiumoxid und Silikate ; organische Stoffe, wie Cellulose, Stärke, Harnstoff und Kunstharze ; und Düngemittel, wie Phosphate und Nitrate, wobei solche Trägerstoffe z. B. als Pulver oder als Granulate vorliegen können.

Als Lösungs- bzw. Dispersionsmittel kommen im wesentlichen in Frage : Aromaten, wie Benzol, Toluol, Xylole und Alkylnaphthaline ; chlorierte Aromaten und chlorierte aliphatische Kohlenwasserstoffe, wie Chlorbenzole, Chloräthylene und Methylenchlorid ; aliphatische Kohlenwasserstoffe, wie Cyclohexan und Paraffine, z. B. Erdölfraktionen ; Alkohole, wie Butanol und Glykol, sowie deren Aether und Ester ; Ketone, wie Aceton, Methyläthylketon, Methylisobutylketon und Cyclohexanon ; und stark polare Lösungs- bzw. Dispersionsmittel, wie Dimethylformamid, N-Methylpyrrolidon und Dimethylsulfoxid, wobei solche Lösungsmittel vorzugsweise Flammpunkte von mindestens 30 °C und Siedepunkte von mindestens 50 °C aufweisen, und Wasser. Unter den Lösungs- bzw. Dispersionsmitteln kommen auch in Frage sogenannte verflüssigte gasförmige Streckmittel oder Trägerstoffe, die solche Produkte sind, welche bei Raumtemperatur und unter Normaldruck gasförmig sind. Beispiele solcher Produkte sind insbesondere Aerosol-Treibgase, wie Halogenkohlenwasserstoffe, z. B. Dichlordifluormethan. Liegt das erfindungsgemässe Unkrautbekämpfungsmittel in Form einer Druckgaspackung vor, so wird zweckmässigerweise zusätzlich zum Treibgas ein Lösungsmittel verwendet.

Die Tenside (Netz- und Emulgiermittel) können nichtionische Verbindungen sein, wie Kondensationsprodukte von Fettsäuren, Fettalkoholen oder fettsubstituierten Phenolen mit Aethylenoxid ; Fettsäureester und -äther von Zuckern oder mehrwertigen Alkoholen ; die Produkte, die aus Zuckern oder mehrwertigen Alkoholen durch Kondensation mit Aethylenoxid erhalten werden ; Blockpolymere von Aethylenoxid und Propylenoxid ; oder Alkyldimethylaminoxide.

Die Tenside können auch anionische Verbindungen sein, wie Seifen ; Fettsulfatester, z. B. Dodecylnatriumsulfat, Octadecylnatriumsulfat und Cetylnatriumsulfat ; Alkylsulfonate, Arylsulfonate und fettaromatische Sulfonate, wie Alkylbenzolsulfonate, z. B. Calcium-dodecylbenzolsulfonat, und Butylnaphthalinsulfonate ; und komplexere Fettsulfonate, z. B. die Amidkondensationsprodukte von Oelsäure und N-Methyltaurin und das Natriumsulfonat von Dioctylsuccinat.

Die Tenside können schliesslich kationische Verbindungen sein, wie Alkyldimethylbenzylammoniumchloride, Dialkyldimethylammoniumchloride, Alkyltrimethylammoniumchloride und äthoxylierte quaternäre Ammoniumchloride.

Als Dispergatoren (ohne Tensidwirkung) kommen im wesentlichen in Frage : Lignin, Natrium- und Ammoniumsalze von Ligninsulfonsäuren, Natriumsalze von Maleinsäureanhybrid-Diisobutylen-Copolymeren, Natrium- und Ammoniumsalze von sulfonierten Polykondensationsprodukten aus Naphthalin und Formaldehyd, und Sulfitablaugen.

Als Dispergatoren, die sich insbesondere als Verdickungs- bzw. Antiabsetzmittel eignen, können z. B. Methylcellulose, Carboxymethylcellulose, Hydroxyäthylcellulose, Polyvinylalkohol, Alginate, Caseinate und Blutalbumin eingesetzt werden.

Beispiele von geeigneten Stabilisatoren sind säurebindende Mittel z. B. Epichlorhydrin, Phenylglycidäther und Soyaepoxide ; Antioxidantien z. B. Gallussäureester und Butylhydroxytoluol ; UV-Absorber, z. B. substituierte Benzophenone, Diphenylacrylonitrilsäureester und Zimtsäureester ; und Deaktivatoren, z. B. Salze der Aethylendiaminotetraessigsäure und Polyglykole.

Die erfindungsgemässen Unkrautbekämpfungsmittel können zusätzlich zu den Verbindungen der Formel I Synergisten und andere Wirkstoffe, z. B. Insektizide, Akarizide, Bakterizide, anderweitige Herbizide, Fungizide, Pflanzenwachstumsregulatoren und Düngemittel, enthalten. Solche Kombinationsmittel eignen sich zur Verstärkung der Aktivität bzw. zur Verbreiterung des Wirkungsspektrums.

Die erfindungsgemässen Unkrautbekämpfungsmittel enthalten im allgemeinen zwischen 0,001 und 95 Gewichtsprozent, vorzugsweise zwischen 5 und 75 Gewichtsprozent einer bzw. mehrerer Verbindungen der Formel I als Wirkstoff(e). Sie können z. B. in einer Form vorliegen, die sich für die Lagerung und den Transport eignet. In solchen Formulierungen, z. B. emulgierbaren Konzentraten, ist die Wirkstoffkonzentration normalerweise im höheren Bereich, vorzugsweise zwischen 10 und 75 Gewichtsprozent, insbesondere zwischen 25 und 50 Gewichtsprozent. Diese Formulierungen können dann, z. B. mit gleichen oder verschiedenen inerten Stoffen, bis zu Wirkstoffkonzentrationen verdünnt werden, die sich für den praktischen Gebrauch eignen, also vorzugsweise 0,1 bis 10 Gewichtsprozent, insbesondere ca. 1 bis 5 Gewichtsprozent. Die Wirkstoffkonzentrationen können jedoch auch kleiner oder grösser sein.

Wie oben erwähnt, kann die Herstellung der erfindungsgemässen Unkrautbekämpfungsmittel in an sich bekannter Weise durchgeführt werden.

Zur Herstellung pulverförmiger Präparate kann der Wirkstoff, d. h. mindestens eine Verbindung der Formel I, mit festem Trägerstoff vermischt werden, z. B. durch Zusammenmahlen ; oder man kann den festen Trägerstoff mit einer Lösung oder Suspension des Wirkstoffes imprägnieren und dann das Lösungs- bzw. Dispersionsmittel durch Abdunsten, Erhitzen oder Absaugen unter vermindertem Druck entfernen. Durch Zusatz von Tensiden bzw. Dispergatoren kann man solche pulverförmige Mittel mit Wasser leicht benetzbar machen, so dass sie in wässrige Suspensionen, die sich z. B. als Spritzmittel eignen, übergeführt werden können.

Die Verbindung der Formel I kann auch mit einem Tensid und einem festen Trägerstoff zur Bildung eines netzbaren Pulvers vermischt werden, welches in Wasser dispergierbar ist, oder sie kann mit einem festen vorgranulierten Trägerstoff zur Bildung eines granulatförmigen Produktes vermischt werden.

Wenn gewünscht, kann die Verbindung der Formel I in einem mit Wasser nicht mischbaren Lösungsmittel, wie beispielsweise einem hochsiedenden Kohlenwasserstoff, gelöst werden, das zweckmässigerweise gelöste Emulgiermittel enthält, so dass die Lösung bei Zugabe zu Wasser selbstemulgierend wirkt. Andernfalls kann der Wirkstoff mit einem Emulgiermittel vermischt und das Gemisch dann mit Wasser auf die gewünschte Konzentration verdünnt werden. Zudem kann der Wirkstoff in einem Lösungsmittel gelöst und danach mit einem Emulgiermittel gemischt werden. Ein solches Gemisch kann ebenfalls mit Wasser auf die gewünschte Konzentration verdünnt werden. Auf diese Weise erhält man emulgierbare Konzentrate bzw. gebrauchsfertige Emulsionen.

Die Verwendung der erfindungsgemässen Unkrautbekämpfungsmittel kann nach üblichen Applikationsmethoden, wie Spritzen, Sprühen, Stäuben, Giessen oder Streuen, erfolgen. Das erfindungsgemässe Verfahren zur Bekämpfung von Unkräutern ist dadurch gekennzeichnet, dass man das gegen Unkräuter zu schützende Gut und/oder die Unkräuter bei einer Dosierung von 10-100 g Wirkstoff/Hektar mit einer erfindungsgemässen Verbindung bzw. einem erfindungsgemässen Unkrautbekämpfungsmittel behandelt.

Die nachfolgenden Beispiele dienen zur näheren Erläuterung der Erfindung.

I. Herstellung der Wirkstoffe der Formel I

Beispiel 1

Zu einer auf 0 °C abgekühlten Lösung von 10,53 g D-2-[p-(6-Chlor-2-chinoxalyloxy) phenoxy]-propionsäurechlorid und 4,88 g Hydroxymethylphosphonsäure-diäthylester in 50 ml Dichlormethan wird unter Rühren eine Lösung von 2,37 g Pyridin in 10 ml Dichlormethan zugetropft. Das Reaktionsgemisch wird 1 Stunde bei Raumtemperatur gerührt und anschliessend unter vermindertem Druck zur Trockene eingedampft. Danach wird der Rückstand in Aethylacetat gelöst und die Lösung mit Wasser und verdünnter Natriumbicarbonatlösung ausgeschüttelt, über einem Trocknungsmittel getrocknet und zur Trockene eingedampft.

Der Rückstand wird an Kieselgel mit Dichlormethan/Diäthyläther (7 : 1) chromatographisch gereinigt. Man erhält den [D-2-[p-(6-Chlor-2-chinoxalyloxy) phenoxy]-propionyloxy]-methylphosphonsäure-diäthylester ; $[\alpha]_D^{20}$ + 34,67° (c = 0,93 % in $CHCl_3$).

In analoger Weise erhält man :

aus D-2-[p-(6-Fluor-2-chinoxalyloxy) phenoxy]-propionsäurechlorid und Hydroxymethylphosphonsäure-diäthylester den [D-2-[p-(6-Fluor-2-chinoxalyloxy) phenoxy]-propionyloxy]-methylphosphonsäure-diäthylester, $[\alpha]_D^{20}$ + 28,08° (c = 1,14 % in $CHCl_3$) ;

aus D-2-[p-(6,7-Dichlor-2-chinoxalyloxy) phenoxy]-propionsäurechlorid und 2-Hydroxyäthylphosphonsäure-diäthylester den 2-[D-2-[p-(6,7-Dichlor-2-chinoxalyloxy) phenoxy]-propionyloxy]-äthylphosphonsäure-diäthylester, $[\alpha]_D^{20}$ + 32,08° (c = 0,95 % in $CHCl_3$) ;

aus D-2-[p-(6,7-Dichlor-2-chinoxalyloxy) phenoxy]-propionsäurechlorid und Hydroxymethylphosphonsäure-diäthylester den [D-2-[p-(6,7-Dichlor-2-chinoxalyloxy) phenoxy]-propionyloxy] methylphosphonsäure-diäthylester, $[\alpha]_D^{20}$ + 35,67° (c = 1,00 % in $CHCl_3$) ;

aus D-2-[p-(5,6-Dichlor-2-chinoxalyloxy) phenoxy]-propionsäurechlorid und 2-Hydroxyäthylphosphonsäure-diäthylester den 2-[D-2-[p-(5,6-Dichlor-2-chinoxalyloxy) phenoxy]-propionyloxy]-äthylphosphonsäure-diäthylester, $[\alpha]_D^{20}$ + 27,69° (c = 1,07 % in $CHCl_3$) ;

aus D-2-[p-(6-Chlor-2-chinoxalyloxy) phenoxy]-propionsäurechlorid und DL-1-Hydroxyäthylphosphonsäure-diäthylester den DL-1-[D-2-[p-(6-Chlor-2-chinoxalyloxy) phenoxy]-propionyloxy]-äthylphosphonsäure-diäthylester, $[\alpha]_D^{20}$ + 26,80° (c = 1,10 % in $CHCl_3$) ;

aus D-2-[p-(6-Chlor-2-chinoxyalyloxy) phenoxy]-propionsäurechlorid und 2-Hydroxyäthylphosphonsäure-diäthylester den 2-[D-2-[p-(6-Chlor-2-chinoxalyloxy) phenoxy]-propionyloxy]-äthylphosphonsäure-diäthylester, $[\alpha]_D^{20}$ + 27,92° (c = 1,04 % in $CHCl_3$) ;

aus D-2-[p-(6-Chlor-2-chinoxalyloxy) phenoxy]-propionsäurechlorid und Hydroxymethylphosphonsäure-dibutylester den [D-2-[p-(6-Chlor-2-chinoxalyloxy) phenoxy]-propionyloxy]-methylphosphonsäure-dibutylester, $[\alpha]_D^{20}$ + 33,11° (c = 1,06 % in $CHCl_3$) ;

aus D-2-[p-(6-Chlor-2-chinolyloxy) phenoxy]-propionsäurechlorid und Hydroxymethylphosphonsäure-diäthylester den [D-2-[p-(6-Chlor-2-chinolyloxy) phenoxy]-propionyloxy]-methylphosphonsäure-diäthylester, $[\alpha]_D^{20}$ + 34,24° (c = 1,03 % in $CHCl_3$) ;

aus D-2-[p-(6-Chlor-2-chinolyloxy) phenoxy]-propionsäurechlorid und DL-1-Hydroxyäthylphosphonsäure-diäthylester den DL-1-[D-2-[p-(6-Chlor-2-chinolyloxy) phenoxy]-propionyloxy]-äthylphosphonsäure-diäthylester, $[\alpha]_D^{20}$ + 30,55° (c = 1,02 % in $CHCl_3$) ; und

aus D-2-[p-(6-Chlor-2-chinolyloxy) phenoxy]-propionsäurechlorid und 2-Hydroxyäthylphosphonsäure-diäthylester den 2-[D-2-[p-(6-Chlor-2-chinolyloxy) phenoxy]-propionyloxy]-äthylphosphonsäure-diäthylester, $[\alpha]_D^{20}$ + 27,39° (c = 1,02 % in $CHCl_3$).

## Beispiel 2

Zu einer Suspension von 1,37 g einer 55 %-igen Natriumhydrid-Dispersion in 150 ml absolutem Dimethylformamid wird bei Raumtemperatur eine Lösung von 10,29 g D-2-[p-(6-Chlor-2-chinolyloxy) phenoxy]-propionsäure in 50 ml absolutem Dimethylformamid zugetropft, und das Gemisch wird 30 Minuten bei 50 °C nachgerührt. Anschliessend fügt man eine Lösung von 8,16 g 3-Brompropylphosphonsäure-diäthylester in 10 ml absolutem Dimethylformamid zu und rührt das Reaktionsgemisch 3 Stunden bei Raumtemperatur. Dann wird das Gemisch mit 2n Salzsäure auf pH 5-6 gebracht. Das Lösungsmittel wird dann bei 50 °C unter vermindertem Druck abdestilliert und der Rückstand mit 200 ml Aethylacetat versetzt und dreimal mit je 100 ml Wasser ausgeschüttelt. Die organische Phase wird über wasserfreiem Natriumsulfat getrocknet und unter vermindertem Druck zur Trockene eingedampft. Der Rückstand wird an Kieselgel mit Dichlormethan/Aethylacetat (3 : 1) chromatographisch gereinigt. Man erhält den 3-[D-2-[p-(6-Chlor-2-chinolyloxy) phenoxy]-propionyloxy]-propylphosphonsäure-diäthylester, $[\alpha]_D^{20}$ + 29,08° (c = 0,83 % in $CHCl_3$).

## Beispiel 3

a) 24,42 g L-2-(p-Toluolsulfonyloxy)-propionsäure werden mit 59,5 g Thionylchlorid 4 Stunden auf Siedepunkt erhitzt und anschliessend unter vermindertem Druck zur Trockene eingedampft. Der Rückstand wird in 150 ml Dichlormethan gelöst und mit 16,82 g Hydroxymethylphosphonsäurediäthylester bei Raumtemperatur versetzt. Dann wird das Gemisch unter Rühren auf 0-5 °C abgekühlt und mit einer Lösung von 8,70 g Pyridin in 25 ml Dichlormethan während 15 Minuten tropfenweise versetzt. Es wird anschliessend 3 Stunden bei Raumtemperatur nachgerührt und das Lösungsmittel unter vermindertem Druck abdestilliert. Der Rückstand wird in Aethylacetat gelöst, die Lösung mit Wasser gewaschen und die organische Phase über wasserfreiem Natriumsulfat getrocknet und eingedampft. Der resultierende Rückstand wird an Kieselgel mit Diäthyläther chromatographisch gereinigt und anschliessend im Kugelrohr destilliert. Man erhält den [L-2-(p-Toluolsulfonyloxy) propionyloxy] methylphosphonsäurediäthylester, Sdp. ca. 210 °C/0,05 mmHg, $[\alpha]_D^{20}$ — 30,32° (c = 1,10 % in $CHCl_3$).

b) Zu einer Suspension von 0,43 g einer 55 %-igen Natriumhydrid-Dispersion in 25 ml Dimethylformamid werden 2,72 g p-(6-Chlor-2-chinoxalyloxy)-phenol zugefügt, und das Gemisch wird 2 Stunden bei Raumtemperatur nachgerührt. Eine Lösung von 3,94 g [L-2-(p-Toluolsulfonyloxy)-propionyloxy]-methylphosphonsäure-diäthylester in 15 ml Dimethylformamid wird während 10 Minuten zugetropft und das Reaktionsgemisch 3 Stunden bei Raumtemperatur nachgerührt und anschliessend unter vermindertem Druck eingedampft. Dann wird der Rückstand in Aethylacetat gelöst, die Lösung mit Wasser gewaschen

und die organische Phase über wasserfreiem Natriumsulfat getrocknet und unter vermindertem Druck eingedampft. Der resultierende Rückstand wird an Kieselgel mit Diäthyläther chromatographisch gereinigt.

Man erhält den [D-2-[p-(6-Chlor-2-chinoxalyloxy)-phenoxy]-propionyloxy] methylphosphonsäure-diäthylester, $[\alpha]_D^{20}$ + 33,21° (c = 1,06 % in $CHCl_3$).

Beispiel 4

a) 46 g D-2-(p-Benzyloxyphenoxy)-propionsäure werden mit 110 ml Thionylchlorid während 2 Stunden bei 90 °C gerührt. Man dampft anschliessend das Gemisch unter vermindertem Druck zur Trockene ein, löst den Rückstand in 190 ml Dichlormethan und versetzt die Lösung bei Raumtemperatur mit 29,4 g Hydroxymethylphosphonsäure-diäthylester. Das Reaktionsgemisch wird unter Rühren auf 5-10 °C abgekühlt und mit einer Lösung von 14,22 g Pyridin in 20 ml Dichlormethan während 20 Minuten tropfenweise versetzt. Man rührt dann weitere 30 Minuten bei Raumtemperatur nach, wäscht das Gemisch anschliessend der Reihe nach mit 2n Salzsäure, 2n Natriumhydroxid-Lösung und Wasser, trocknet es über wasserfreiem Natriumsulfat und dampft es zur Trockene ein. Der Rückstand wird an Kieselgel mit Aethylacetat/n-Hexan (3 : 1) chromatographisch gereinigt.

Man erhält den [D-2-(p-Benzyloxyphenoxy)-propionyloxy]-methylphosphonsäure-diäthylester, $[\alpha]_D^{20}$ + 36,04° (c = 1,07 % in $CHCl_3$), $n_D^{20}$ = 1,5304.

b) 10 g [D-2-(p-Benzyloxyphenoxy)-propionyloxy] methylphosphonsäure-diäthylester werden in 150 ml Methanol gelöst, und zur Lösung wird 1 g Palladium/Aktivkohle (10 % Pd) gegeben. Das Gemisch wird bei Normaldruck und Raumtemperatur während 20 Stunden hydriert, der Katalysator anschliessend abfiltriert und das Filtrat unter vermindertem Druck zur Trockene eingedampft. Der Rückstand wird an Kieselgel mit Aethylacetat/n-Hexan (2 : 1) chromatographisch gereinigt.

Man erhält den [D-2-(p-Hydroxyphenoxy)-propionyloxy]-methylphosphonsäure-diäthylester, $[\alpha]_D^{20}$ + 39,40° (c = 1,00 % in $CHCl_3$), $n_D^{20}$ = 1,5033.

c) Eine Lösung von 2 g [D-2-(p-Hydroxyphenoxy)-propionyloxy] methylphosphonsäure-diäthylester in 25 ml Dimethylsulfoxid wird mit 0,14 g Natriumhydrid versetzt, und das Gemisch wird 30 Minuten bei Raumtemperatur nachgerührt. Man tropft anschliessend eine Lösung von 1,01 g 2-Chlorbenzthiazol in 10 ml Dimethylsulfoxid während 5 Minuten zu und rührt das Reaktionsgemisch 12 Stunden bei 95 °C. Dann wird das Gemisch auf 100 ml Eiswasser gegossen und mit Aethylacetat ausgeschüttelt. Man wäscht die organische Phase mit Wasser, trocknet sie über wasserfreiem Natriumsulfat und dampft sie unter vermindertem Druck ein. Der Rückstand wird an Kieselgel mit Aethylacetat/n-Hexan (2 : 1) chromatographisch gereinigt.

Man erhält den [D-2-[p-(2-Benzthiazolyloxy) phenoxy]-propionyloxy] methylphosphonsäure-diäthylester, $[\alpha]_D^{20}$ + 9,06° (c = 0,89 % in $CHCl_3$).

In analoger Weise erhält man :

aus [D-2-(p-Hydroxyphenoxy)-propionyloxy] methylphosphonsäure-diäthylester und 2,5-Dichlorbenzthiazol den [D-2-[p-(5-Chlor-2-benzthiazolyloxy) phenoxy]-propionyloxy] methylphosphonsäure-diäthylester, $[\alpha]_D^{20}$ + 18,00° (c = 1,06 % in $CHCl_3$) ; und

aus [D-2-(p-Hydroxyphenoxy)-propionyloxy] methylphosphonsäure-diäthylester und 2,4,6-Trichlorbenzthiazol den [D-2-[p-(4,6-Dichlor-2-benzthiazolyloxy) phenoxy]-propionyloxy] methylphosphonsäurediäthylester, $[\alpha]_D^{20}$ + 19,47° (c = 0,76 % in $CHCl_3$).

II. Formulierungsbeispiele

Beispiel 5

Zur Herstellung eines emulgierbaren Konzentrates werden die nachstehend aufgeführten Bestandteile miteinander vermischt :

| | |
|---|---|
| Verbindung der Formel I | 250 g/l |
| N-Methyl-2-pyrrolidon | 300 g/l |
| Emulgator A[1] | 100 g/l |
| Emulgator B[2] | 25 g/l |
| Lösungsmittelgemisch aus Alkylbenzolen | auf 1 000 ml |

[1] Emulgator bestehend aus 60 Teilen eines Aethylenoxid-Propylenoxid-Blockpolymerisats, 20 Teilen Dodecylbenzolsulfonsäure-Calciumsalz und 20 Teilen Isobutanol/$C_{10}$-Alkylbenzole-Gemisch.

[2] Emulgator bestehend aus 70 Teilen Dodecylbenzolsulfonsäure-Calciumsalz und 30 Teilen Isobutanol/$C_{10}$-Alkylbenzole-Gemisch

Das so erhaltene Konzentrat emulgiert spontan in Wasser. Die sich ergebende Emulsion eignet sich als gebrauchsfertige Spritzbrühe.

Beispiel 6

Zur Herstellung eines Suspensionskonzentrates werden die nachstehend aufgeführten Bestandteile miteinander vermischt und in einer Perlmühle feingemahlen :

| | Gewichtsprozent |
|---|---|
| Verbindung der Formel I | 25 |
| Aethylenglykol | 8,0 |
| Formaldehyd (30 %) | 1,0 |
| Kieselsäure, hochdispers | 0,5 |
| Silikon-Antischaummittel | 0,5 |
| Nonylphenol-(10)-äthoxylat | 2,0 |
| Natrium-polyphenolformaldehydsulfonat | 4,0 |
| Xanthan-Gum | 0,3 |
| Destilliertes Wasser | zu 100,0 |

Das so erhaltene Suspensionskonzentrat lässt sich spontan in Wasser dispergieren und ergibt eine gebrauchsfertige Spritzbrühe.

**Patentansprüche** (für die Vertragsstaaten : BE, CH, DE, FR, GB, IT, LI, NL, SE)

1. Verbindungen der allgemeinen Formel

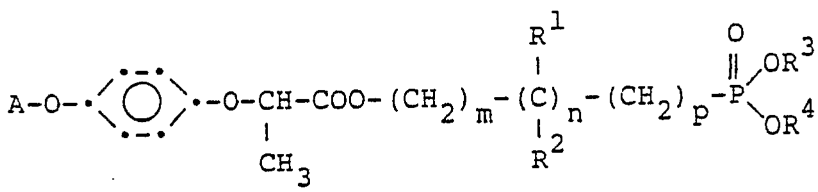

(I)

worin A eine der folgenden Gruppen (a) und (b)

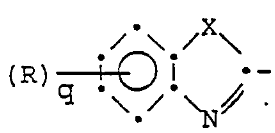

(a)

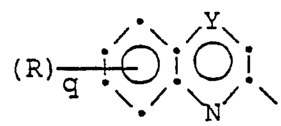

(b)

R Wasserstoff, Halogen, $C_{1-4}$-Alkyl, Trifluormethyl, $C_{1-4}$-Alkoxy oder $C_{1-4}$-Alkylthio,

X Sauerstoff, Schwefel oder —$NR^5$—,

Y die Methingruppe oder ein Stickstoffatom,

$R^1$ Wasserstoff oder $C_{1-4}$-Alkyl und $R^2$ Wasserstoff, $C_{1-4}$-Alkyl, $C_{1-4}$-Halogenalkyl oder gegebenenfalls mono- oder mehrfach substituiertes Phenyl, wobei die gegebenenfalls vorhandenen Substituenten Halogenatome, $C_{1-4}$-Alkylgruppen, $C_{1-4}$-Alkoxygruppen und Nitrogruppen sind, oder $R^1$ und $R^2$, zusammen mit dem Kohlenstoffatom, an das sie geknüpft sind, einen gegebenenfalls substituierten $C_{5-8}$-Cycloalkanring, wobei die gegebenenfalls vorhandenen Substituenten eine bis drei $C_{1-4}$-Alkylgruppen sind,

$R^3$ und $R^4$, unabhängig voneinander, $C_{1-6}$-Alkyl oder Phenyl,

$R^5$ Wasserstoff oder $C_{1-4}$-Alkyl,

m, n und p, unabhängig voneinander, die Zahl 0 oder 1, wobei deren Summe mindestens 1 beträgt, und q die Zahl 1 oder 2 bedeuten.

2. Verbindungen nach Anspruch 1, worin R Chlor bedeutet.

3. Verbindungen nach Anspruch 1 oder 2, worin $R^1$ Wasserstoff, Methyl oder Aethyl bedeutet.

4. Verbindungen nach einem der Ansprüche 1 bis 3, worin $R^2$ Wasserstoff, Methyl oder Aethyl bedeutet.

5. Verbindungen nach einem der Ansprüche 1 bis 4, worin $R^3$ und $R^4$, unabhängig voneinander, $C_{1-6}$-Alkyl bedeuten.

6. Verbindungen nach einem der Ansprüche 1 bis 5, worin q 1 bedeutet.

7. Verbindungen nach einem der Ansprüche 1 bis 6 in der D-Form.

8. [D-2-[p-(6-Chlor-2-chinoxalyloxy) phenoxy]-propionyloxy] methylphosphonsäure-diäthylester.

9. [D-2-[p-(6-Chlor-2-chinolyloxy) phenoxy]-propionyloxy] methylphosphonsäure-diäthylester.

10. Eine Verbindung nach Anspruch 1 als Unkrautbekämpfungsmittel.

11. Unkrautbekämpfungsmittel, dadurch gekennzeichnet, dass es eine wirksame Menge mindestens einer Verbindung der allgemeinen Formel

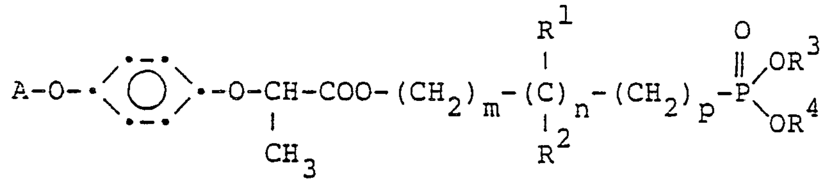

worin A eine der folgenden Gruppen (a) und (b)

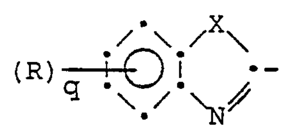

(a)

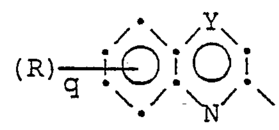

(b)

R Wasserstoff, Halogen, $C_{1-4}$-Alkyl, Trifluormethyl, $C_{1-4}$-Alkoxy oder $C_{1-4}$-Alkylthio,
X Sauerstoff, Schwefel oder —$NR^5$—,
Y die Methingruppe oder ein Stickstoffatom,
$R^1$ Wasserstoff oder $C_{1-4}$-Alkyl und $R^2$ Wasserstoff, $C_{1-4}$-Alkyl, $C_{1-4}$-Halogenalkyl oder gegebenenfalls mono- oder mehrfach substituiertes Phenyl, wobei die gegebenenfalls vorhandenen Substituenten Halogenatome, $C_{1-4}$-Alkylgruppen, $C_{1-4}$-Alkoxygruppen und Nitrogruppen sind, oder $R^1$ und $R^2$, zusammen mit dem Kohlenstoffatom, an das sie geknüpft sind, einen gegebenenfalls substituierten $C_{5-8}$-Cycloalkanring, wobei die gegebenenfalls vorhandenen Substituenten eine bis drei $C_{1-4}$-Alkylgruppen sind,
$R^3$ und $R^4$, unabhängig voneinander, $C_{1-6}$-Alkyl oder Phenyl,
$R^5$ Wasserstoff oder $C_{1-4}$-Alkyl,
m, n und p, unabhängig voneinander, die Zahl 0 oder 1, wobei deren Summe mindestens 1 beträgt, und q die Zahl 1 oder 2 bedeuten,
sowie Formulierungshilfsstoffe enthält.

12. Unkrautbekämpfungsmittel nach Anspruch 11, dadurch gekennzeichnet, dass es eine wirksame Menge von [D-2-[p-(6-Chlor-2-chinoxalyloxy) phenoxy]-propionyloxy] methylphosphonsäure-diäthylester oder [D-2-[p-(6-Chlor-2-chinolyloxy) phenoxy]-propionyloxy] methylphosphonsäure-diäthylester sowie Formulierungshilfsstoffe enthält.

13. Verfahren zur Herstellung von Verbindungen der allgemeinen Formel

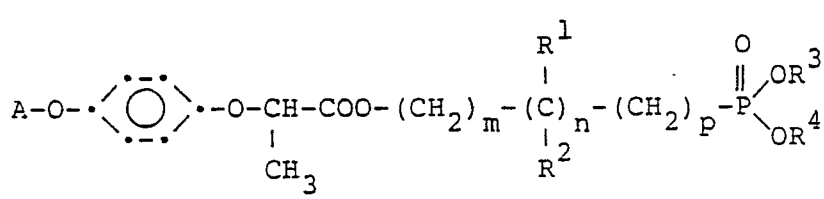

(I)

worin A eine der folgenden Gruppen (a) und (b)

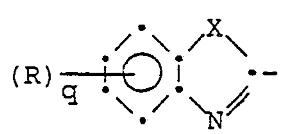

(a)

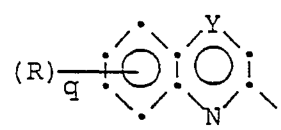

(b)

R Wasserstoff, Halogen, $C_{1-4}$-Alkyl, Trifluormethyl, $C_{1-4}$-Alkoxy oder $C_{1-4}$-Alkylthio,
X Sauerstoff, Schwefel oder —$NR^5$—,
Y die Methingruppe oder ein Stickstoffatom,
$R^1$ Wasserstoff oder $C_{1-4}$-Alkyl und $R^2$ Wasserstoff, $C_{1-4}$-Alkyl, $C_{1-4}$-Halogenalkyl oder gegebenen-

falls mono- oder mehrfach substituiertes Phenyl, wobei die gegebenenfalls vorhandenen Substituenten Halogenatome, $C_{1-4}$-Alkylgruppen, $C_{1-4}$-Alkoxygruppen und Nitrogruppen sind, oder $R^1$ und $R^2$, zusammen mit dem Kohlenstoffatom, an das sie geknüpft sind, einen gegebenenfalls substituierten $C_{5-8}$-Cycloalkanring, wobei die gegebenenfalls vorhandenen Substituenten eine bis drei $C_{1-4}$-Alkylgruppen sind,

$R^3$ und $R^4$, unabhängig voneinander, $C_{1-6}$-Alkyl oder Phenyl,

$R^5$ Wasserstoff oder $C_{1-4}$-Alkyl,

m, n und p, unabhängig voneinander, die Zahl 0 oder 1, wobei deren Summe mindestens 1 beträgt, und q die Zahl 1 oder 2 bedeuten,

dadurch gekennzeichnet, dass man

a) eine Säure der allgemeinen Formel

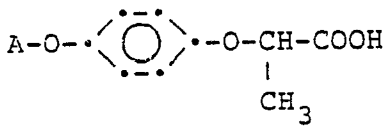

(II)

worin A die oben angegebene Bedeutung besitzt, oder ein reaktionsfähiges Derivat davon, mit einem Alkohol der allgemeinen Formel

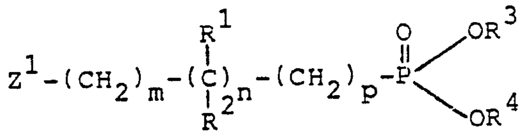

(III)

worin

$R^1$, $R^2$, $R^3$, $R^4$, m, n und p die oben angegebenen Bedeutungen besitzen und

$Z^1$ Hydroxy oder eine Abgangsgruppe bedeutet,

umsetzt,

b) ein Phenol der allgemeinen Formel

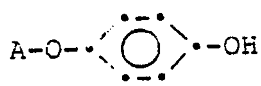

(IV)

worin A die oben angegebene Bedeutung besitzt, oder ein Alkalimetallsalz davon, mit einer Verbindung der allgemeinen Formel

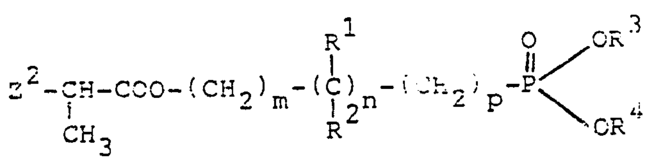

(V)

worin

$R^1$, $R^2$, $R^3$, $R^4$, m, n und p die oben angegebenen Bedeutungen besitzen und

$Z^2$ eine Abgangsgruppe bedeutet,

umsetzt, oder

c) ein Halogenid der allgemeinen Formel

A—Hal (VI)

worin

A die oben angegebene Bedeutung besitzt und

Hal Halogen bedeutet,

mit einem Phenol der allgemeinen Formel

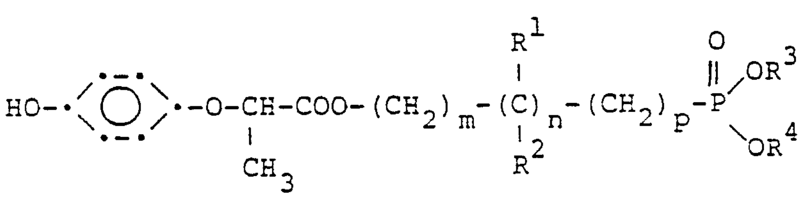

(VII)

worin $R^1$, $R^2$, $R^3$, $R^4$, m, n und p die oben angegebenen Bedeutungen besitzen, oder einem Alkalimetallsalz davon, umsetzt.

14. Verfahren zur Bekämpfung von Unkräutern, dadurch gekennzeichnet, dass man das gegen Unkräuter zu schützende Gut und/oder die Unkräuter bei einer Dosierung von 10-100 g Wirkstoff/Hektar mit einer der in den Ansprüchen 1 bis 9 genannten Verbindungen bzw. einem in Anspruch 11 oder 12 genannten Mittel behandelt.

15. Verwendung einer der in den Ansprüchen 1 bis 9 genannten Verbindungen bzw. eines in Anspruch 11 oder 12 genannten Mittels zur Bekämpfung von Unkräutern.

**Patentansprüche** (für den Vertragsstaat AT)

1. Unkrautbekämpfungsmittel, dadurch gekennzeichnet, dass es eine wirksame Menge mindestens einer Verbindung der allgemeinen Formel

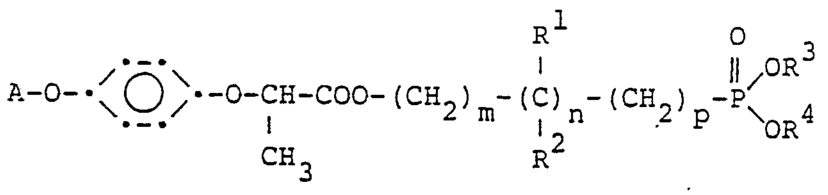

(I)

worin A eine der folgenden Gruppen (a) und (b)

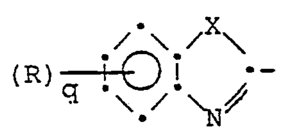

(a)

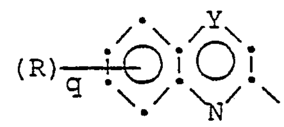

(b)

R Wasserstoff, Halogen, $C_{1-4}$-Alkyl, Trifluormethyl, $C_{1-4}$-Alkoxy oder $C_{1-4}$-Alkylthio,
X Sauerstoff, Schwefel oder —$NR^5$—,
Y die Methingruppe oder ein Stickstoffatom,
$R^1$ Wasserstoff oder $C_{1-4}$-Alkyl und $R^2$ Wasserstoff, $C_{1-4}$-Alkyl, $C_{1-4}$-Halogenalkyl oder gegebenenfalls mono- oder mehrfach substituiertes Phenyl, wobei die gegebenenfalls vorhandenen Substituenten Halogenatome, $C_{1-4}$-Alkylgruppen, $C_{1-4}$-Alkoxygruppen und Nitrogruppen sind, oder $R^1$ und $R^2$, zusammen mit dem Kohlenstoffatom, an das sie geknüpft sind, einen gegebenenfalls substituierten $C_{5-8}$-Cycloalkanring, wobei die gegebenenfalls vorhandenen Substituenten eine bis drei $C_{1-4}$-Alkylgruppen sind,
$R^3$ und $R^4$, unabhängig voneinander, $C_{1-6}$-Alkyl oder Phenyl,
$R^5$ Wasserstoff oder $C_{1-4}$-Alkyl,
m, n und p, unabhängig voneinander, die Zahl 0 oder 1, wobei deren Summe mindestens 1 beträgt, und q die Zahl 1 oder 2 bedeuten,
sowie Formulierungshilfsstoffe enthält.

2. Unkrautbekämpfungsmittel nach Anspruch 1, worin R Chlor bedeutet.

3. Unkrautbekämpfungsmittel nach Anspruch 1 oder 2, worin $R^1$ Wasserstoff, Methyl oder Aethyl bedeutet.

4. Unkrautbekämpfungsmittel nach einem der Ansprüche 1 bis 3, worin $R^2$ Wasserstoff, Methyl oder Aethyl bedeutet.

5. Unkrautbekämpfungsmittel nach einem der Ansprüche 1 bis 4, worin $R^3$ und $R^4$, unabhängig voneinander, $C_{1-6}$-Alkyl bedeuten.

6. Unkrautbekämpfungsmittel nach einem der Ansprüche 1 bis 5, worin q 1 bedeutet.

7. Unkrautbekämpfungsmittel nach einem der Ansprüche 1 bis 6, worin die Verbindungen in der D-Form sind.

8. Unkrautbekämpfungsmittel nach Anspruch 1, dadurch gekennzeichnet, dass es eine wirksame Menge von [D-1-[p-(6-Chlor-2-chinoxalyloxy) phenoxy]-propionyloxy] methylphosphonsäure-diäthylester sowie Formulierungshilfsstoffe enthält.

9. Unkrautbekämpfungsmittel nach Anspruch 1, dadurch gekennzeichnet, dass es eine wirksame Menge von [D-2-[p-(6-Chlor-2-chinolyloxy) phenoxy]-propionyloxy] methylphosphonsäure-diäthylester sowie Formulierungshilfsstoffe enthält.

10. Verfahren zur Herstellung von Verbindungen der allgemeinen Formel

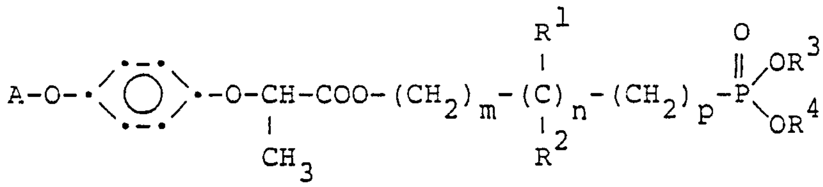

(I)

worin A eine der folgenden Gruppen (a) und (b)

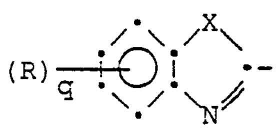

(a)

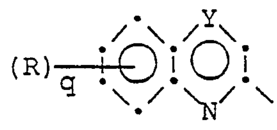

(b)

R Wasserstoff, Halogen, $C_{1-4}$-Alkyl, Trifluormethyl, $C_{1-4}$-Alkoxy oder $C_{1-4}$-Alkylthio,
X Sauerstoff, Schwefel oder $—NR^5—$,
Y die Methingruppe oder ein Stickstoffatom,
$R^1$ Wasserstoff oder $C_{1-4}$-Alkyl und $R^2$ Wasserstoff, $C_{1-4}$-Alkyl, $C_{1-4}$-Halogenalkyl oder gegebenenfalls mono- oder mehrfach substituiertes Phenyl, wobei die gegebenenfalls vorhandenen Substituenten Halogenatome, $C_{1-4}$-Alkylgruppen, $C_{1-4}$-Alkoxygruppen und Nitrogruppen sind, oder $R^1$ und $R^2$, zusammen mit dem Kohlenstoffatom, an das sie geknüpft sind, einen gegebenenfalls substituierten $C_{5-8}$-Cycloalkanring, wobei die gegebenenfalls vorhandenen Substituenten eine bis drei $C_{1-4}$-Alkylgruppen sind,
$R^3$ und $R^4$, unabhängig voneinander, $C_{1-6}$-Alkyl oder Phenyl,
$R^5$ Wasserstoff oder $C_{1-4}$-Alkyl,
m, n und p, unabhängig voneinander, die Zahl 0 oder 1, wobei deren Summe mindestens 1 beträgt, und q die Zahl 1 oder 2 bedeuten,
dadurch gekennzeichnet, dass man
a) eine Säure der allgemeinen Formel

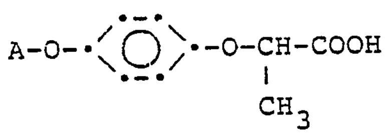

(II)

worin A die oben angegebene Bedeutung besitzt, oder ein reaktionsfähiges Derivat davon, mit einem Alkohol der allgemeinen Formel

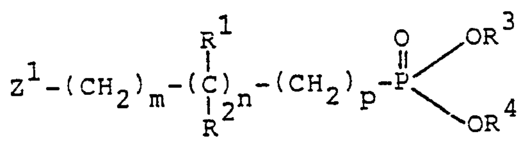

(III)

worin
$R^1$, $R^2$, $R^3$, $R^4$, m, n und p die oben angegebenen Bedeutungen besitzen und
$Z^1$ Hydroxy oder eine Abgangsgruppe bedeutet,
umsetzt,
b) ein Phenol der allgemeinen Formel

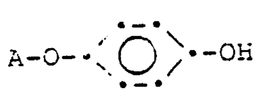

(IV)

worin A die oben angegebene Bedeutung besitzt, oder ein Alkalimetallsalz davon, mit einer Verbindung der allgemeinen Formel

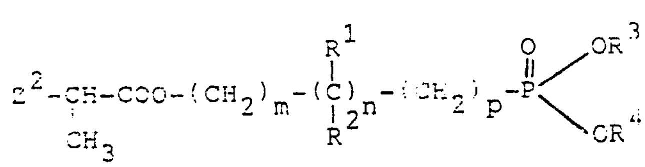

(V)

worin
R[1], R[2], R[3], R[4], m, n und p die oben angegebenen Bedeutungen besitzen und
$Z^2$ eine Abgangsgruppe bedeutet,
umsetzt, oder

c) ein Halogenid der allgemeinen Formel

A—Hal (VI)

worin
A die oben angegebene Bedeutung besitzt und
Hal Halogen bedeutet,
mit einem Phenol der allgemeinen Formel

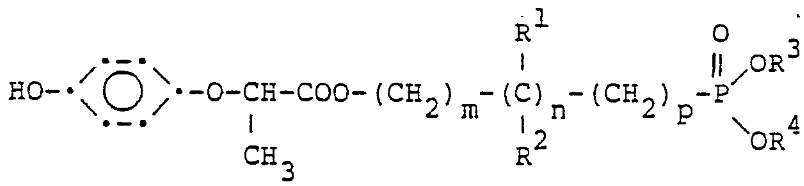

(VII)

worin $R^1$, $R^2$, $R^3$, $R^4$, m, n und p die oben angegebenen Bedeutungen besitzen, oder einem Alkalimetallsalz davon, umsetzt.

11. Verfahren zur Herstellung eines Unkrautbekämpfungsmittels, dadurch gekennzeichnet, dass man mindestens eine der in den Ansprüchen 1 bis 9 genannten Verbindungen mit Formulierungshilfsstoffen vermischt.

12. Verfahren zur Bekämpfung von Unkräutern, dadurch gekennzeichnet, dass man das gegen Unkräuter zu schützende Gut und/oder die Unkräuter bei einer Dosierung von 10-100 g Wirkstoff/Hektar mit einer der in den Ansprüchen 1 bis 9 genannten Verbindungen bzw. einem der in den Ansprüchen 1 bis 9 genannten Mittel behandelt.

13. Verwendung einer der in den Ansprüchen 1 bis 9 genannten Verbindungen bzw. eines der in den Ansprüchen 1 bis 9 genannten Mittel zur Bekämpfung von Unkräutern.

**Claims** (for the Contracting States : BE, CH, DE, FR, GB, IT, LI, NL SE)

1. Compounds of the general formula

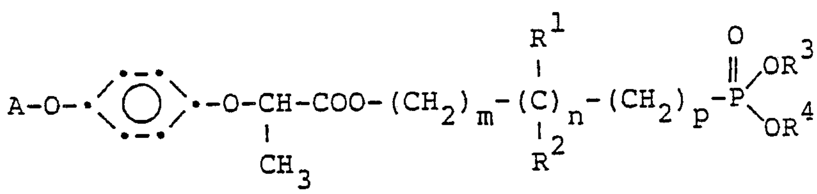

(I)

wherein A signifies one of the following groups (a) and (b)

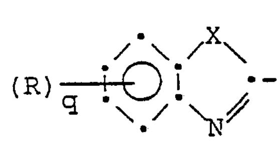

(a)

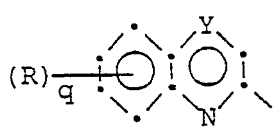

(b)

R signifies hydrogen, halogen, $C_{1-4}$-alkyl, trifluoromethyl, $C_{1-4}$-alkoxy or $C_{1-4}$-alkylthio,
X signifies oxygen, sulphur or —$NR^5$—,
Y signifies the methyne group or a nitrogen atom,
$R^1$ signifies hydrogen or $C_{1-4}$-alkyl and $R^2$ signifies hydrogen, $C_{1-4}$-alkyl, $C_{1-4}$-haloalkyl or optionally monosubstituted or multiply substituted phenyl, the optionally present substituents being halogen atoms, $C_{1-4}$-alkyl groups, $C_{1-4}$-alkoxy groups and nitro groups, or $R^1$ and $R^2$ together with the carbon atom to which they are attached signify an optionally substituted $C_{5-8}$-cycloalkane ring, the optionally present substituents being one to three $C_{1-4}$-alkyl groups,
$R^3$ and $R^4$ each independently signify $C_{1-6}$-alkyl or phenyl,
$R^5$ signifies hydrogen or $C_{1-4}$-alkyl,

m, n and p each independently signify the number 0 or 1, the sum thereof being at least 1, and q signifies the number 1 or 2.

2. Compounds according to claim 1, wherein R signifies chlorine.

3. Compounds according to claim 1 or 2, wherein $R^1$ signifies hydrogen, methyl or ethyl.

4. Compounds according to any one of claims 1 to 3, wherein $R^2$ signifies hydrogen, methyl or ethyl.

5. Compounds according to any one of claims 1 to 4, wherein $R^3$ and $R^4$ each independently signify $C_{1-6}$-alkyl.

6. Compounds according to any one of claims 1 to 5, wherein q signifies 1.

7. Compounds according to any one of claims 1 to 6 in the D-Form.

8. Diethyl [D-2-[p-(6-chloro-2-quinoxalyloxy)-phenoxy]-propionyloxy] methylphosphonate.

9. Diethyl [D-2-[p-(6-chloro-2-quinolyloxy) phenoxy]-propionyloxy] methylphosphonate.

10. A compound according to claim 1 as a weed control agent.

11. A weed control composition, characterized in that it contains an effective amount of at least one compound of the general formula

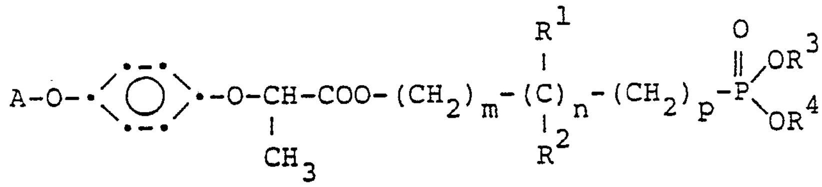 (I)

wherein A signifies one of the following groups (a) and (b)

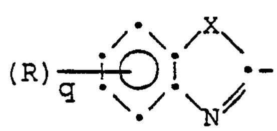

(a)

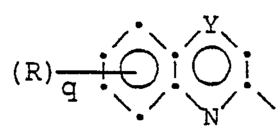

(b)

R signifies hydrogen, halogen, $C_{1-4}$-alkyl, trifluoromethyl, $C_{1-4}$-alkoxy or $C_{1-4}$-alkylthio,

X signifies oxygen, sulphur or $—NR^5—$,

Y signifies the methyne group or a nitrogen atom,

$R^1$ signifies hydrogen or $C_{1-4}$-alkyl and $R^2$ signifies hydrogen, $C_{1-4}$-alkyl, $C_{1-4}$-haloalkyl or optionally monosubstituted or multiply substituted phenyl, the optionally present substituents being halogen atoms, $C_{1-4}$-alkyl groups, $C_{1-4}$-alkoxy groups and nitro groups, or $R^1$ and $R^2$ together with the carbon atom to which they are attached signify an optionally substituted $C_{5-8}$-cycloalkane ring, the optionally present substituents being one to three $C_{1-4}$-alkyl groups,

$R^3$ and $R^4$ each independently signify $C_{1-6}$-alkyl or phenyl,

$R^5$ signifies hydrogen or $C_{1-4}$-alkyl,

m, n and p each independently signify the number 0 or 1, the sum thereof being at least 1, and q signifies the number 1 or 2,

as well as formulation adjuvants.

12. A weed control composition according to claim 11, characterized in that it contains an effective amount of diethyl [D-2-[p-(6-chloro-2-quinoxalyloxy) phenoxy]-propionyloxy] methylphosphonate or diethyl [D-2-[p-(6-chloro-2-quinolyloxy) phenoxy]-propionyloxy] methylphosphonate as well as formulation adjuvants.

13. A process for the manufacture of compounds of the general formula

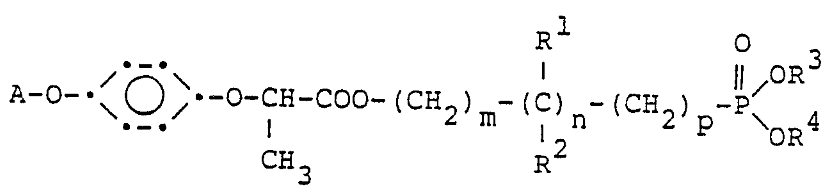 (I)

wherein A signifies one of the following groups (a) and (b)

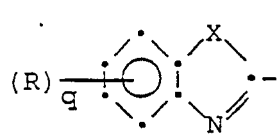

(a)

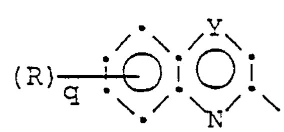

(b)

R signifies hydrogen, halogen, $C_{1-4}$-alkyl, trifluoromethyl, $C_{1-4}$-alkoxy or $C_{1-4}$-alkylthio,

X signifies oxygen, sulphur or $-NR^5-$,

Y signifies the methyne group or a nitrogen atom,

$R^1$ signifies hydrogen or $C_{1-4}$-alkyl and $R^2$ signifies hydrogen, $C_{1-4}$-alkyl, $C_{1-4}$-haloalkyl or optionally monosubstituted or multiply substituted phenyl, the optionally present substituents being halogen atoms, $C_{1-4}$-alkyl groups, $C_{1-4}$-alkoxy groups and nitro groups, or $R^1$ and $R^2$ together with the carbon atom to which they are attached signifiy an optionally substituted $C_{5-8}$-cycloalkane ring, the optionally present substituents being one to three $C_{1-4}$-alkyl groups,

$R^3$ and $R^4$ each independently signify $C_{1-6}$-alkyl or phenyl,

$R^5$ signifies hydrogen or $C_{1-4}$-alkyl,

m, n and p each independently signify the number 0 or 1, the sum thereof being at least 1, and q signifies the number 1 or 2,

characterized by

a) reacting an acid of the general formula

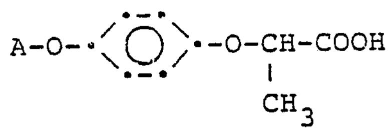

(II)

wherein A has the significance given above, or a reactive derivative thereof, with an alcohol of the general formula

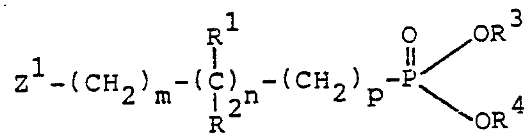

(III)

wherein

$R^1$, $R^2$, $R^3$, $R^4$, m, n and p have the significances given above and

$Z^1$ signifies hydroxy or a leaving group,

b) reacting a phenol of the general formula

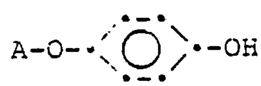

(IV)

wherein A has the significance given above, or an alkali metal salt thereof, with a compound of the general formula

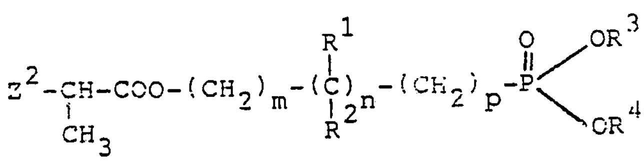

(V)

wherein

$R^1$, $R^2$, $R^3$, $R^4$, m, n and p have the significances given above and

$Z^2$ signifies a leaving group, or

c) reacting a halide of the general formula

A—Hal (VI)

wherein

A has the significance given above, and

Hal signifies halogen,

with a phenol of the general formula

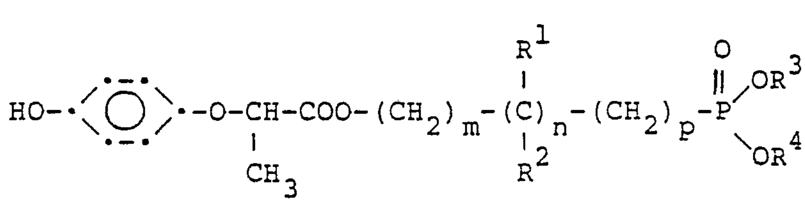

(VII)

wherein $R^1$, $R^2$, $R^3$, $R^4$, m, n and p have the significances given above, or an alkali metal salt thereof.

14. A method for the control of weeds, characterized by treating the locus to be protected against weeds and/or the weeds with one of the compounds set forth in claims 1 to 9 or a composition set forth in claim 11 or 12 at a dosage of 10-100 g of active substance/hectare.

15. The use of one of the compounds set forth in claims 1 to 9 or of a composition set forth in claim 11 or 12 for the control of weeds.

**Claims** (for the Contracting State AT)

1. A weed control composition, characterized in that it contains an effective amount of at least one compound of the general formula

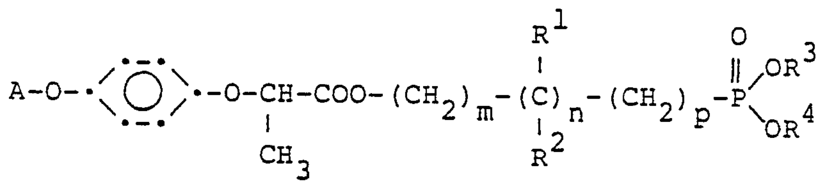

(I)

wherein A signifies one of the following groups (a) and (b)

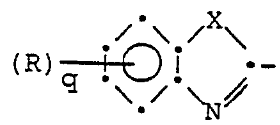

(a)

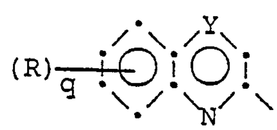

(b)

R signifies hydrogen, halogen, $C_{1-4}$-alkyl, trifluoromethyl, $C_{1-4}$-alkoxy or $C_{1-4}$-alkylthio,

X signifies oxygen, sulphur or $—NR^5—$,

Y signifies the methyne group or a nitrogen atom,

$R^1$ signifies hydrogen or $C_{1-4}$-alkyl and $R^2$ signifies hydrogen, $C_{1-4}$-alkyl, $C_{1-4}$-haloalkyl or optionally monosubstituted or multiply substituted phenyl, the optionally present substituents being halogen atoms, $C_{1-4}$-alkyl groups, $C_{1-4}$-alkoxy groups and nitro groups, or $R^1$ and $R^2$ together with the carbon atom to which they are attached signify an optionally substituted $C_{5-8}$-cycloalkane ring, the optionally present substituents being one to three $C_{1-4}$-alkyl groups,

$R^3$ and $R^4$ each independently signify $C_{1-6}$-alkyl or phenyl,

$R^5$ signifies hydrogen or $C_{1-4}$-alkyl,

m, n and p each independently signify the number 0 or 1, the sum thereof being at least 1, and q signifies the number 1 or 2,

as well as formulation adjuvants.

2. A weed control composition according to claim 1, wherein R signifies chlorine.

3. A weed control composition according to claim 1 or 2, wherein $R^1$ signifies hydrogen, methyl or ethyl.

4. A weed control composition according to any one of claims 1 to 3, wherein $R^2$ signifies hydrogen, methyl or ethyl.

5. A weed control composition according to any one of claims 1 to 4, wherein $R^3$ and $R^4$ each independently signify $C_{1-6}$-alkyl.

6. A weed control composition according to any one of claims 1 to 5, wherein q signifies 1.

7. A weed control composition according to any one of claims 1 to 6, wherein the compounds are in the D-Form.

8. A weed control composition according to claim 1, characterized in that it contains an effective amount of diethyl [D-1-[p-(6-chloro-2-quinoxalyloxy) phenoxy]-propionyloxy] methylphosphonate as well as formulation adjuvants.

9. A weed control composition according to claim 1, characterized in that it contains an effective amount of diethyl [D-2-[p-(6-chloro-2-quinolyloxy) phenoxy]-propionyloxy] methylphosphonate as well as formulation adjuvants.

10. A process for the manufacture of compounds of the general formula

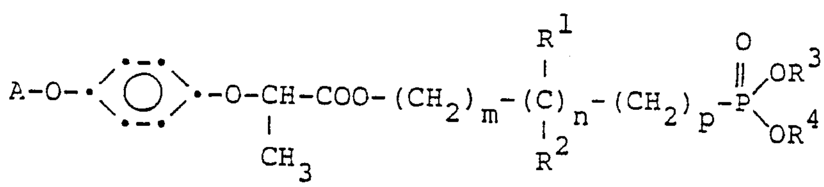

(I)

wherein A signifies one of the following groups (a) and (b)

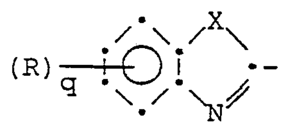

(a)

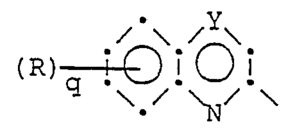

(b)

R signifies hydrogen, halogen, $C_{1-4}$-alkyl, trifluoromethyl, $C_{1-4}$-alkoxy or $C_{1-4}$-alkylthio,
X signifies oxygen, sulphur or $—NR^5—$,
Y signifies the methyne group or a nitrogen atom,
$R^1$ signifies hydrogen or $C_{1-4}$-alkyl and $R^2$ signifies hydrogen, $C_{1-4}$-alkyl, $C_{1-4}$-haloalkyl or optionally monosubstituted or multiply substituted phenyl, the optionally present substituents being halogen atoms, $C_{1-4}$-alkyl groups, $C_{1-4}$-alkoxy groups and nitro groups, or $R^1$ and $R^2$ together with the carbon atom to which they are attached signify an optionally substituted $C_{5-8}$-cycloalkane ring, the optionally present substituents being one to three $C_{1-4}$-alkyl groups,
$R^3$ and $R^4$ each independently signify $C_{1-6}$-alkyl or phenyl,
$R^5$ signifies hydrogen or $C_{1-4}$-alkyl,
m, n and p each independently signify the number 0 or 1, the sum thereof being at least 1, and q signifies the number 1 or 2,
characterized by
a) reacting an acid of the general formula

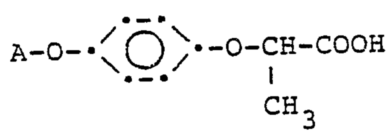

(II)

wherein A has the significance given above, or a reactive derivative thereof, with an alcohol of the general formula

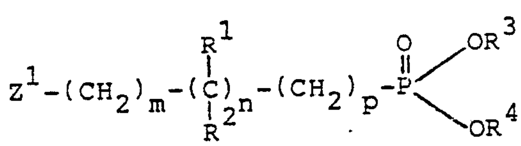

(III)

wherein
$R^1$, $R^2$, $R^3$, $R^4$, m, n and p have the significances given above and
$Z^1$ signifies hydroxy or a leaving group,
b) reacting a phenol of the general formula

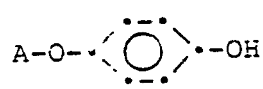

(IV)

wherein A has the significance given above, or an alkali metal salt thereof, with a compound of the general formula

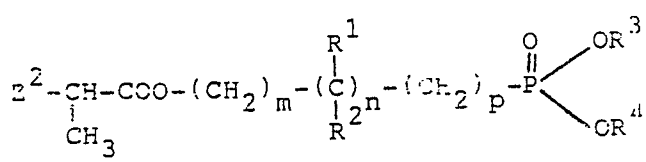

(V)

wherein
$R^1$, $R^2$, $R^3$, $R^4$, m, n and p have the significances given above and
$Z^2$ signifies a leaving group, or
c) reacting a halide of the general formula

A—Hal (VI)

wherein
A has the significance given above, and

Hal signifies halogen,
with a phenol of the general formula

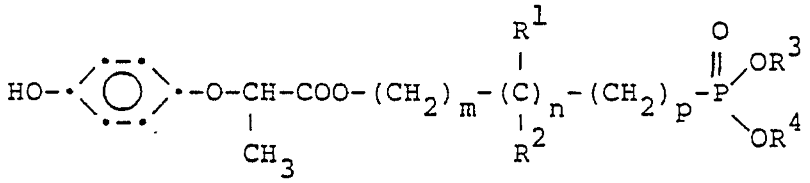 (VII)

wherein $R^1$, $R^2$, $R^3$, $R^4$, m, n and p have the significances given above, or an alkali metal salt thereof.

11. A process for the manufacture of a weed control composition, characterized by mixing at least one of the compounds set forth in claims 1 to 9 with formulation adjuvants.

12. A method for the control of weeds, characterized by treating the locus to be protected against weeds and/or the weeds with one of the compounds set forth in claims 1 to 9 or a composition set forth in claims 1 to 9 at a dosage of 10-100 g of active substance/hectare.

13. The use of one of the compounds set forth in claims 1 to 9 or of one of the compositions set forth in claims 1 to 9 for the control of weeds.

**Revendications** (pour les Etats contractants : BE, CH, DE, FR, GB, IT, LI, NL, SE)

1. Composés de formule générale

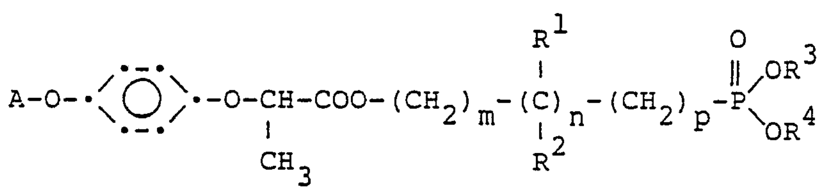 (I)

dans laquelle A représente l'un des groupes suivants (a) et (b)

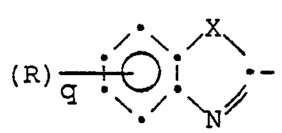

(a)

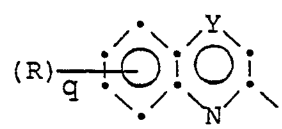

(b)

R représente l'hydrogène, un halogène, un groupe alkyle en $C_1$-$C_4$, trifluorométhyle, alcoxy en $C_1$-$C_4$ ou alkylthio en $C_1$-$C_4$,

X représente l'oxygène, le soufre ou le groupe —$NR^5$—,

Y représente le groupe méthine ou un atome d'azote,

$R^1$ représente l'hydrogène ou un groupe alkyle en $C_1$-$C_4$ et $R^2$ représente l'hydrogène, un groupe alkyle en $C_1$-$C_4$, halogénoalkyle en $C_1$-$C_4$ ou un groupe phényle éventuellement mono- ou poly-substitué, les substituants éventuels étant des atomes d'halogènes, des groupes alkyle en $C_1$-$C_4$, alcoxy en $C_1$-$C_4$ et nitro, ou bien $R^1$ et $R^2$, pris ensemble et avec l'atome de carbone auquel ils sont reliés, représentent un noyau cycloalcane en $C_5$-$C_8$ éventuellement substitué, les substituants éventuels consistant en 1 à 3 groupes alkyle en $C_1$-$C_4$,

$R^3$ et $R^4$ représentent chacun, indépendamment l'un de l'autre, un groupe alkyle en $C_1$-$C_6$ ou phényle,

$R^5$ représente l'hydrogène ou un groupe alkyle en $C_1$-$C_4$,

m, n et p représentent chacun, indépendamment l'un de l'autre, les nombres 0 ou 1, leur somme étant au moins égale à 1,

et q est égal à 1 ou 2.

2. Composés selon la revendication 1, dans lesquels R représente le chlore.

3. Composés selon la revendication 1 ou 2, dans lesquels $R^1$ représente l'hydrogène, un groupe méthyle ou éthyle.

4. Composés selon l'une des revendications 1 à 3, dans lesquels $R^2$ représente l'hydrogène, un groupe méthyle ou éthyle.

5. Composés selon l'une des revendications 1 à 4, dans lesquels $R^3$ et $R^4$ représentent chacun, indépendamment l'un de l'autre, un groupe alkyle en $C_1$-$C_6$.

6. Composés selon l'une des revendications 1 à 5, dans lesquels q est égal à 1.

7. Composés selon l'une des revendications 1 à 6, sous la forme D.

8. Le (D-2-[p-(6-chloro-2-quinoxalyloxy)-phénoxy]-propionyloxy)-méthylphosphonate de diéthyle.

9. Le (D-2-[p-(6-chloro-2-quinoléyloxy)-phénoxy]-propionyloxy)-méthylphosphonate de diéthyle.

10. Un composé selon la revendication 1, en tant que produit herbicide.

11. Produit herbicide caractérisé en ce qu'il contient une quantité efficace d'au moins un composé de formule générale

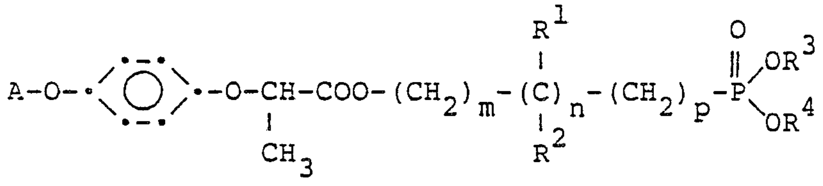

(I)

dans laquelle A représente l'un des groupes suivants (a) et (b)

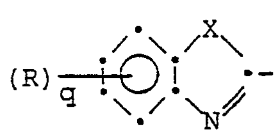

(a)

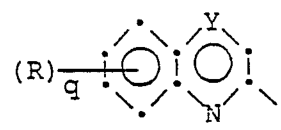

(b)

R représente l'hydrogène, un halogène, un groupe alkyle en $C_1$-$C_4$, trifluorométhyle, alcoxy en $C_1$-$C_4$ ou alkylthio en $C_1$-$C_4$,

X représente l'oxygène, le soufre ou le groupe $—NR^5—$,

Y représente le groupe méthine ou un atome d'azote,

$R^1$ représente l'hydrogène ou un groupe alkyle en $C_1$-$C_4$ et $R^2$ représente l'hydrogène, un groupe alkyle en $C_1$-$C_4$, halogénoalkyle en $C_1$-$C_4$ ou phényle éventuellement mono- ou poly-substitué, les substituants éventuels étant des atomes d'halogènes, des groupes alkyle en $C_1$-$C_4$, alcoxy en $C_1$-$C_4$ et nitro, ou bien $R^1$ et $R^2$, pris ensemble et avec l'atome de carbone auquel ils sont reliés, représentent un noyau cycloalcane en $C_5$-$C_8$ éventuellement substitué, les substituants éventuels consistant en 1 à 3 groupes alkyle en $C_1$-$C_4$,

$R^3$ et $R^4$ représentent chacun, indépendamment l'un de l'autre, un groupe alkyle en $C_1$-$C_6$ ou phényle,

$R^5$ représente l'hydrogène ou un groupe alkyle en $C_1$-$C_4$,

m, n et p représentent chacun, indépendamment l'un de l'autre, le nombre 0 ou 1, leur somme étant au moins égale à 1,

et q est égal à 1 ou 2,

et des produits auxiliaires de formulation.

12. Produit herbicide selon la revendication 11, caractérisé en ce qu'il contient une quantité efficace de (D-2-[p-(6-chloro-2-quinoxalyloxy)-phénoxy]-propionyloxy)-méthylphosphonate de diéthyle ou de (D-2-[p-(6-chloro-2-quinoléyloxy)-phénoxy]-propionyloxy)-méthylphosphonate de diéthyle et des produits auxiliaires de formulation.

13. Procédé de préparation des composés de formule générale

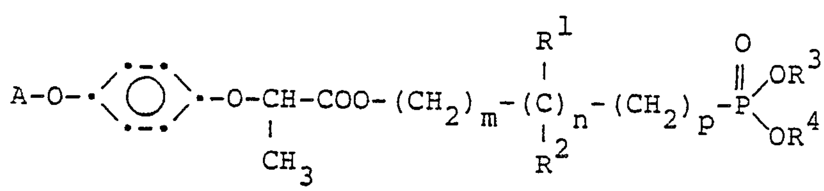

(I)

dans laquelle A représente l'un des groupes suivants (a) et (b)

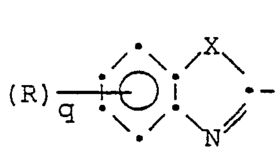

(a)

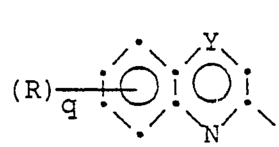

(b)

R représente l'hydrogène, un halogène, un groupe alkyle en $C_1$-$C_4$, trifluorométhyle, alcoxy en $C_1$-$C_4$ ou alkylthio en $C_1$-$C_4$,

X représente l'oxygène, le soufre ou un groupe —$NR^5$—,

Y représente le groupe méthine ou un atome d'azote,

$R^1$ représente l'hydrogène ou un groupe alkyle en $C_1$-$C_4$ et $R^2$ représente l'hydrogène, un groupe alkyle en $C_1$-$C_4$, halogénoalkyle en $C_1$-$C_4$ ou un groupe phényle éventuellement mono- ou poly-substitué, les substituants éventuels étant des atomes d'halogènes, des groupes alkyle en $C_1$-$C_4$, alcoxy en $C_1$-$C_4$ et nitro, ou bien $R^1$ et $R^2$, pris ensemble et avec l'atome de carbone auquel ils sont reliés, représentent un noyau cycloalcane en $C_5$-$C_8$ éventuellement substitué, les substituants éventuels consistant en 1 à 3 groupes alkyle en $C_1$-$C_4$,

$R^3$ et $R^4$ représentent chacun, indépendamment l'un de l'autre, un groupe alkyle en $C_1$-$C_6$ ou phényle,

$R^5$ représente l'hydrogène ou un groupe alkyle en $C_1$-$C_4$,

m, n et p représentent chacun, indépendamment l'un de l'autre, le nombre 0 et 1, leur somme étant au moins égale à 1,

et q est égal à 1 ou 2,

caractérisé en ce que :

a) on fait réagir un acide de formule générale

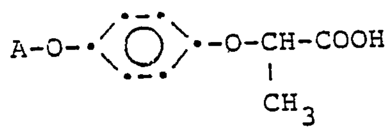

(II)

dans laquelle A a les significations indiquées ci-dessus, ou un dérivé réactif de cet acide, avec un alcool de formule générale

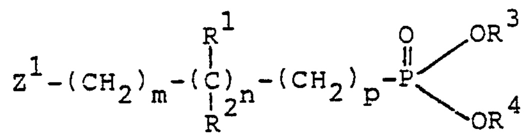

(III)

dans laquelle

$R^1$, $R^2$, $R^3$, $R^4$, m, n et p ont les significations indiquées ci-dessus et

$Z^1$ représente un groupe hydroxy ou un groupe éliminable,

b) on fait réagir un phénol de formule générale

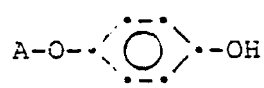

(IV)

dans laquelle A a les significations indiquées ci-dessus, ou un sel de métal alcalin de ce phénol, avec un composé de formule générale

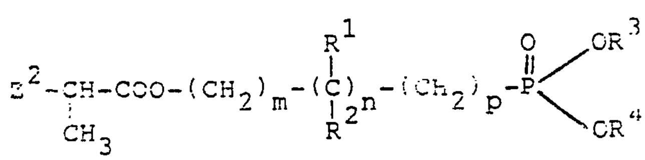

(V)

dans laquelle $R^1$, $R^2$, $R^3$, $R^4$, m, n et p ont les significations indiquées ci-dessus et $Z^2$ représente un groupe éliminable, ou bien

c) on fait réagir un halogénure de formule générale

A—Hal (VI)

dans laquelle

A a les significations indiquées ci-dessus, et

Hal représente un halogène,

avec un phénol de formule générale

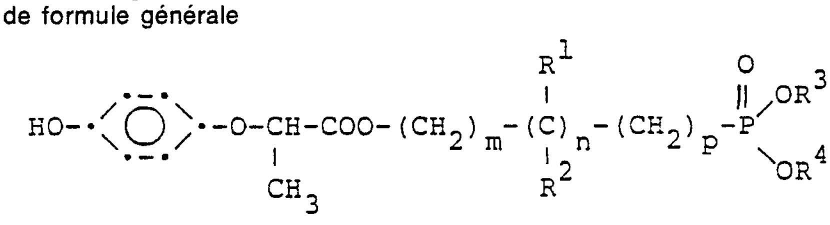

(VII)

dans laquelle $R^1$, $R^2$, $R^3$, $R^4$, m, n et p ont les significations indiquées ci-dessus, ou avec un sel de métal alcalin de ce phénol.

14. Procédé pour combattre les mauvaises herbes, caractérisé en ce que l'on traite le bien à protéger contre les mauvaises herbes et/ou les mauvaises herbes à une dose de 10 à 100 g de substance active/ha par un des composés mentionnés dans les revendications 1 à 9 ou un produit mentionné dans la revendication 11 ou 12.

15. Utilisation de l'un des composés mentionnés dans les revendications 1 à 9 ou d'un produit mentionné dans la revendication 11 ou 12, dans la lutte contre les mauvaises herbes.

**Revendications** (pour l'Etat contractant AT)

1. Produit herbicide caractérisé en ce qu'il contient une quantité efficace d'au moins un composé de formule générale

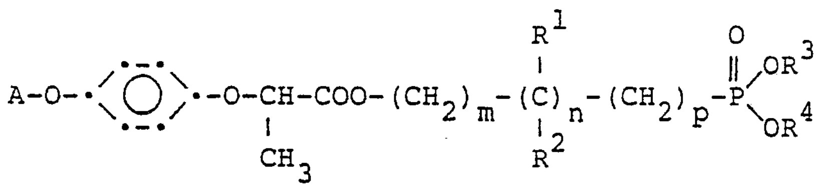

(I)

dans laquelle A représente l'un des groupes suivants (a) et (b)

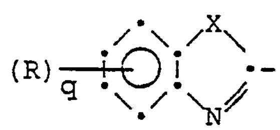

(a)

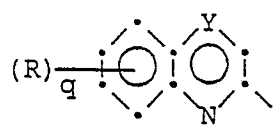

(b)

R représente l'hydrogène, un halogène, un groupe alkyle en $C_1$-$C_4$, trifluorométhyle, alcoxy en $C_1$-$C_4$ ou alkylthio en $C_1$-$C_4$,

X représente l'oxygène, le soufre ou un groupe —$NR^5$—,

Y représente le groupe méthine ou un atome d'azote,

$R^1$ représente l'hydrogène ou un groupe alkyle en $C_1$-$C_4$ et $R^2$ représente l'hydrogène, un groupe alkyle en $C_1$-$C_4$, halogénoalkyle en $C_1$-$C_4$ ou un groupe phényle éventuellement mono- ou poly-substitué, les substituants éventuels étant des atomes d'halogènes, des groupes alkyle en $C_1$-$C_4$, alcoxy en $C_1$-$C_4$ et nitro, ou bien $R^1$ et $R^2$, pris ensemble et avec l'atome de carbone auquel ils sont reliés, représentent un noyau cycloalcane en $C_5$-$C_8$ éventuellement substitué, les substituants éventuels consistant en 1 à 3 groupes alkyle en $C_1$-$C_4$,

$R^3$ et $R^4$ représentent chacun, indépendamment l'un de l'autre, un groupe alkyle en $C_1$-$C_6$ ou phényle,

$R^5$ représente l'hydrogène ou un groupe alkyle en $C_1$-$C_4$,

m, n et p représentent chacun, indépendamment les uns des autres, le nombre 0 ou 1, leur somme devant être au moins égale à 1

et q est égal à 1 ou 2,

et des produits auxiliaires de formulation.

2. Produit herbicide selon la revendication 1, dans lequel R représente le chlore.

3. Produit herbicide selon la revendication 1 ou 2, dans lequel $R^1$ représente l'hydrogène, un groupe méthyle ou éthyle.

4. Produit herbicide selon l'une des revendications 1 à 3, dans lequel $R^2$ représente l'hydrogène, un groupe méthyle ou éthyle.

5. Produit herbicide selon l'une des revendications 1 à 4, dans lequel $R^3$ et $R^4$ représentent chacun, indépendamment l'un de l'autre, un groupe alkyle en $C_1$-$C_6$.

6. Produit herbicide selon l'une des revendications 1 à 5, dans lequel q est égal à 1.

7. Produit herbicide selon l'une des revendications 1 à 6, dans lequel les composés sont sous la forme D.

8. Produit herbicide selon la revendication 1, caractérisé en ce qu'il contient une quantité efficace de (D-1-[p-(6-chloro-2-quinoxalyloxy)-phénoxy]-propionyloxy)-méthylphosphonate de diéthyle et des produits auxiliaires de formulation.

9. Produit herbicide selon la revendication 1, caractérisé en ce qu'il contient une quantité efficace de (D-2-[p-(6-chloro-2-quinoléyloxy)-phénoxy]-propionyloxy)-méthylphosphonate de diéthyle et des produits auxiliaires de formulation.

10. Procédé de préparation des composés de formule générale

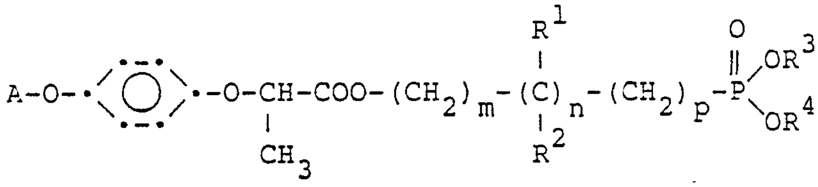

(I)

dans laquelle A représente l'un des groupes suivants (a) et (b)

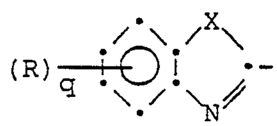

(a)

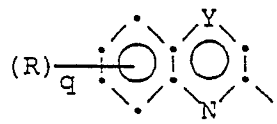

(b)

R représente l'hydrogène, un halogène, un groupe alkyle en $C_1$-$C_4$, trifluorométhyle, alcoxy en $C_1$-$C_4$ ou alkylthio en $C_1$-$C_4$,

X représente l'oxygène, le soufre ou un groupe —$NR^5$—,

Y représente le groupe méthine ou un atome d'azote,

$R^1$ représente l'hydrogène ou un groupe alkyle en $C_1$-$C_4$ et $R^2$ représente l'hydrogène, un groupe alkyle en $C_1$-$C_4$, halogénoalkyle en $C_1$-$C_4$ ou un groupe phényle éventuellement mono- ou poly-substitué, les substituants éventuels étant des atomes d'halogènes, des groupes alkyle en $C_1$-$C_4$, alcoxy en $C_1$-$C_4$ et nitro, ou bien $R^1$ et $R^2$, pris ensemble et avec l'atome de carbone auquel ils sont reliés, représentent un noyau cycloalcane en $C_5$-$C_8$ éventuellement substitué, les substituants éventuels consistant en 1 à 3 groupes alkyle en $C_1$-$C_4$,

$R^3$ et $R^4$ représentent chacun, indépendamment l'un de l'autre, un groupe alkyle en $C_1$-$C_6$ ou phényle,

$R^5$ représente l'hydrogène ou un groupe alkyle en $C_1$-$C_4$,

m, n et p représentent chacun, indépendamment les uns des autres, le nombre 0 ou 1, leur somme étant au moins égale à 1,

et q est égal à 1 ou 2,

caractérisé en ce que :

a) on fait réagir un acide de formule générale

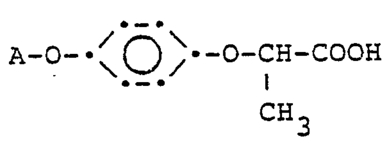

(II)

dans laquelle A a les significations indiquées ci-dessus, ou un dérivé réactif de cet acide, avec un alcool de formule générale

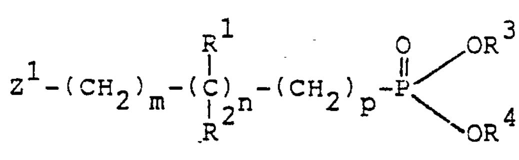

(III)

dans laquelle

$R^1$, $R^2$, $R^3$, $R^4$, m, n et p ont les significations indiquées ci-dessus et

$Z^1$ représente un groupe hydroxy ou un groupe éliminable,

b) on fait réagir un phénol de formule générale

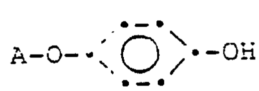

(IV)

dans laquelle A a les significations indiquées ci-dessus, ou un sel de métal alcalin de ce phénol, avec un composé de formule générale

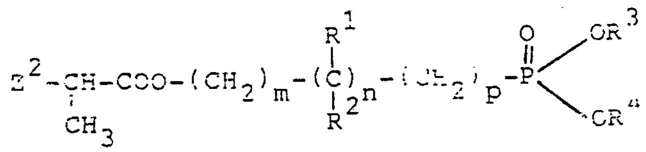

(V)

dans laquelle
$R^1$, $R^2$, $R^3$, $R^4$, m, n et p ont les significations indiquées ci-dessus et
$Z^2$ représente un groupe éliminable, ou bien
c) on fait réagir un halogénure de formule générale

A—Hal (VI)

dans laquelle
A a les significations indiquées ci-dessus et
Hal représente un halogène,
avec un phénol de formule générale

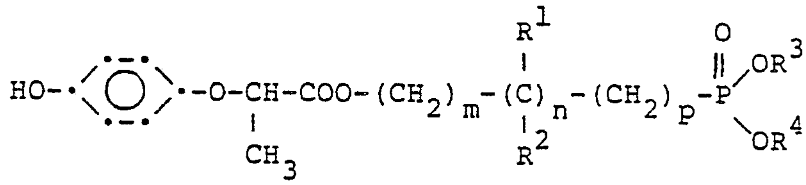

(VII)

dans laquelle $R^1$, $R^2$, $R^3$, $R^4$, m, n et p ont les significations indiquées ci-dessus, ou un sel de métal alcalin de ce phénol.

11. Procédé de préparation d'un produit herbicide, caractérisé en ce que l'on mélange au moins un des composés mentionnés dans les revendications 1 à 9 avec des produits auxiliaires de formulation.

12. Procédé pour combattre les mauvaises herbes, caractérisé en ce que l'on traite le bien à protéger contre les mauvaises herbes et/ou les mauvaises herbes à une dose de 10 à 100 g de substance active/ha par l'un des composés mentionnés dans les revendications 1 à 9 ou l'un des produits mentionnés dans les revendications 1 à 9.

13. Utilisation de l'un des composés mentionnés dans les revendications 1 à 9 ou de l'un des produits mentionnés dans les revendications 1 à 9 dans la lutte contre les mauvaises herbes.